# EUROPEAN PATENT SPECIFICATION

(11) **EP 3 096 198 B1**
(45) Date of publication and mention of the grant of the patent: **25.08.2021**
(21) Application number: 16165210.2
(22) Date of filing: 14.04.2016
(51) Int. Cl.: G05G 5/05, G05G 5/03, G05G 9/047, F16H 59/10, F16H 61/24

(54) **OPERATION DEVICE AND VEHICULAR SHIFT DEVICE INCLUDING THE OPERATION DEVICE**
BETRIEBSVORRICHTUNG UND FAHRZEUGVERSCHIEBUNGSVORRICHTUNG MIT DER BETRIEBSVORRICHTUNG
DISPOSITIF DE COMMANDE ET DISPOSITIF DE CHANGEMENT DE VITESSE DE VÉHICULE COMPRENANT LE DISPOSITIF DE COMMANDE

(30) Priority: 17.04.2015 JP 2015085100
(43) Date of publication of application: 23.11.2016
(73) Proprietor: Alps Alpine Co., Ltd., Tokyo 145-8501 (JP)
(72) Inventor: Uenomachi, Takashi, Tokyo, Tokyo 145-8501 (JP)
(74) Representative: Schmitt-Nilson Schraud Waibel Wohlfrom Patentanwälte Partnerschaft mbB

(56) References cited:
- EP-A1- 1 615 250
- EP-A1- 2 891 835
- EP-A2- 0 091 100
- WO-A1-2014/023529
- US-A- 4 723 458

## Description

### BACKGROUND OF THE INVENTION

### 1. Field of the Invention

The present invention relates to an operation device used as an operable body that is operated by being tilted. The invention particularly relates to an operation device including a magnetic body and a vehicular shift device including the operation device.

### 2. Description of the Related Art

Operable bodies operated by being tilted have been commonly used for many types of devices such as remote controllers for various types of electronic devices including television sets or videocassette recorders, input devices for game machines, or vehicular operation devices. Particularly for input devices for game machines or vehicular operation devices, an operation device is operated in such a manner that its operable body is grasped and tilted for operation. Operators of vehicular operation devices and other devices desire that, when they tilt an operable body to perform a gearshift operation, the operation devices provide them tactile feedback for better maneuverability.

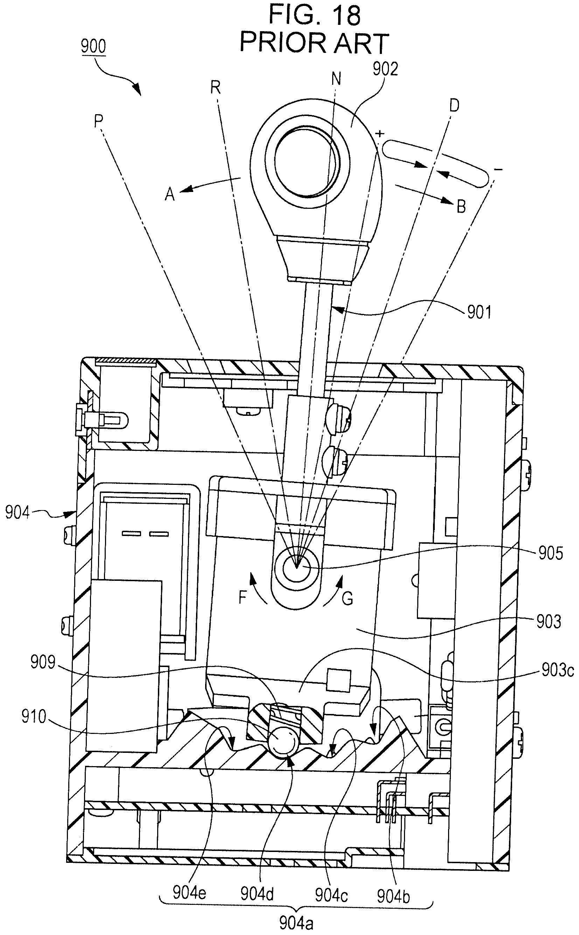

Japanese Unexamined Patent Application Publication No. 2002-144905 (existing example) has developed an automatic transmission shifting device 900, illustrated in Fig. 18, as a multi-directional input operation device providing such tactile feedback. Fig. 18 is an enlarged cross-sectional view of the automatic transmission shifting device 900 according to the existing example taken vertically, in the state where a shift lever 901 is positioned in a neutral range (N range).

The automatic transmission shifting device 900 illustrated in Fig. 18 includes a shift lever 901, which is pivotable and to which a knob 902 is fixed, a holder 903, which is tiltable and fixed to the shift lever 901, a first shaft 905, which renders the shift lever 901 pivotable, a second shaft (not illustrated) perpendicular to the first shaft 905, and a casing 904, which axially supports the first shaft 905 and the second shaft.

As illustrated in Fig. 18, in the automatic transmission shifting device 900, the shift lever 901 is pivotable around the first shaft 905 used as a pivot shaft so as to be positioned in a parking range (P range), a reverse range (R range), a neutral range (N range), and a drive range (D range). The shift lever 901 is supported in each position (P range, R range, N range, or D range) or automatically returned using a tactile-feedback spring 909 and a tactile-feedback provider 910, which are disposed in a lower body portion 903c of the holder 903, and tactile-feedback grooves 904a, formed in the inner bottom of the casing 904. Specifically, as illustrated in Fig. 18, the tactile-feedback grooves 904a include a first tactile-feedback groove 904b, which supports the shift lever 901 to be disposed in the P range, a second tactile-feedback groove 904c, which supports the shift lever 901 to be disposed in the R range, a third tactile-feedback groove 904d, which supports the shift lever 901 to be disposed in the N range, and a fourth tactile-feedback groove 904e, which supports the shift lever 901 to be disposed in the D range. The first to fourth tactile-feedback grooves 904b to 904e are arranged in the front-rear direction. The tactile-feedback provider 910 urged by the tactile-feedback spring 909 slides over between these tactile-feedback grooves 904a.

In the automatic transmission shifting device 900 having this configuration, the tactile-feedback provider 910 can provide the shift lever 901 tactile feedback when the tactile-feedback provider 910 moves between the tactile-feedback grooves 904a (904b, 904c, 904d, and 904e) disposed so as to correspond to the respective positions (P range, R range, N range, and D range).

However, the existing example including a sliding mechanism in which the tactile-feedback provider 910 slides over between the tactile-feedback grooves 904a to provide such tactile feedback has the following problem. Repeated pivotable operations of the shift lever 901 cause deterioration of the durability of the sliding mechanism, such as wear of the tactile-feedback grooves 904a or the tactile-feedback spring 909, degradation of the elasticity of the tactile-feedback spring 909, or backlash of the tactile-feedback spring 909 and the tactile-feedback provider 910.

### SUMMARY OF THE INVENTION

To address the above-described problem, the present invention provides a highly durable operation device with tactile feedback and a vehicular shift device including the operation device. An operation device using magnetic bodies is known from EP 1 615 250 A1, which is considered to form the closest prior art.

To address the above-described problem, an operation device according to the invention having a plurality of positions includes an operation member tiltable by being operated by an operator, the operation member being disposed in the plurality of positions as a result of being tilted by the operator from a reference position, a support body that supports the operation member so as to allow the operation member to tilt, a plurality of stopper portions corresponding to the plurality of positions, a plurality of movable magnetic bodies that tilt in association with the operation member, and an opposing magnetic body disposed between each opposing pair of the plurality of movable magnetic bodies. The plurality of movable magnetic bodies are composed of a soft magnetic material and the opposing magnetic body is composed of a permanent magnet. The pair of movable magnetic bodies are located adjacent and attracted to each other when the operation member is disposed in the reference position. One of the movable magnetic bodies of the pair is tilted and the other one of the movable magnetic bodies of the pair is prevented from tilting by the corresponding stopper portion when the operation member is disposed in any of the plurality of positions after being tilted from the reference position.

According to the operation device of the invention, at the shifting from the reference position to any of the multiple positions, one of the movable magnetic bodies is kept being tilted in a first direction and the other one of the movable magnetic bodies is prevented from tilting by a corresponding one of the stopper portions. Thus, in each position, the pair of movable magnetic bodies are pulled apart and become separated from each other, so that the relationship between the movable magnetic bodies changes from a strongly attracted state to a weakly attracted state. An operator can thus receive tactile feedback. In contrast to an existing example, the operation device does not include a sliding mechanism at a portion that causes tactile feedback, whereby the operation device can have high durability.

In the operation device according to the invention, the support body includes a tilt shaft that allows the operation member to tilt. The operation member includes an operation shaft having a pillar shape and a base portion extending in a plane through which an axis of the operation shaft passes. The base portion rotates around the tilt shaft. The base portion includes a first pushing portion and a second pushing portion, disposed on both sides of the operation shaft with the tilt shaft interposed therebetween. The operation device further comprises a plurality of movable members that hold the plurality of movable magnetic bodies and tilt in association with the plurality of movable magnetic bodies. The plurality of movable members are composed of a non-magnetic material. The plurality of movable members include a first movable member, disposed so as to face the first pushing portion, and a second movable member, disposed so as to face the second pushing portion. The plurality of movable magnetic bodies include a first movable magnetic body, a second movable magnetic body, a third movable magnetic body, paired with the first movable magnetic body, and a fourth movable magnetic body, paired with the second movable magnetic body. The first movable member holds the first movable magnetic body and the second movable member holds the second movable magnetic body. The plurality of movable members include a third movable member, which holds the third movable magnetic body, and a fourth movable member, which holds the fourth movable magnetic body. When the operation member is tilted in a first direction, the first pushing portion tilting in a direction in which the base portion tilts pushes the first movable member opposing the first pushing portion, the first movable magnetic body held by the first movable member is tilted, the corresponding stopper portion prevents the third movable magnetic body from tilting, and the first movable magnetic body and the third movable magnetic body become separated from each other. When the operation member keeps being tilted further in the first direction, the second pushing portion pushes the second movable member opposing the second pushing portion, the second movable magnetic body held by the second movable member is tilted, the corresponding stopper portion prevents the fourth movable magnetic body from tilting, and the second movable magnetic body and the fourth movable magnetic body become separated from each other.

According to the operation device having the above-described configuration, the first movable magnetic body, which is tilting, and the third movable magnetic body, stopped by the stopper portion, become easily separated from each other. Likewise, when the operation member keeps being tilted further in the first direction, the second movable magnetic body, which is tilting, and the fourth movable magnetic body, stopped by the stopper portion, become easily separated from each other, the second and fourth movable magnetic bodies being located on the side of the tilt shaft opposite to the side on which the first and third movable magnetic bodies are located. Thus, in each position, the paired first and third movable magnetic bodies can become easily separated from each other and the paired second and fourth movable magnetic bodies can become easily separated from each other. Thus, the operation device with tactile feedback can be easily manufactured.

In the operation device according to the invention, the base portion includes a third pushing portion, opposing the third movable member, and a fourth pushing portion, opposing the fourth movable member. The third pushing portion and the fourth pushing portion are disposed on both sides of the operation shaft with the tilt shaft interposed therebetween. When the operation member is tilted in a second direction, the third pushing portion tilted in the direction in which the base portion tilts pushes the third movable member opposing the third pushing portion, the third movable magnetic body held by the third movable member is tilted, the corresponding stopper portion prevents the first movable magnetic body from tilting, and the first movable magnetic body and the third movable magnetic body become separated from each other. When the operation member keeps being tilted further in the second direction, the fourth pushing portion pushes the fourth movable member opposing the fourth pushing portion, the fourth movable magnetic body held by the fourth movable member is tilted, the corresponding stopper portion prevents the second movable magnetic body from tilting, and the second movable magnetic body and the fourth movable magnetic body become separated from each other.

According to the operation device having the above-described configuration, the third movable magnetic body, which is tilting, and the first movable magnetic body, stopped by the stopper portion, become easily separated from each other. Likewise, when the operation member keeps being tilted further in the second direction, the fourth movable magnetic body, which is tilting, and the second movable magnetic body, stopped by the stopper portion, become easily separated from each other, the second and fourth movable magnetic bodies being located on the side of the tilt shaft opposite to the side on which the first and third movable magnetic bodies are located. Thus, in each position, the paired first and third movable magnetic bodies can become easily separated from each other and the paired second and fourth movable magnetic bodies can become easily separated from each other. Thus, the operation device with tactile feedback can be easily manufactured.

In the operation device according to the invention, the base portion includes a fifth pushing portion, opposing the third movable member, and a sixth pushing portion, opposing the fourth movable member. The fifth pushing portion and the sixth pushing portion are disposed on both sides of the operation shaft with the tilt shaft interposed therebetween. When the operation member is tilted in a second direction, the sixth pushing portion tilting in the direction in which the base portion tilts pushes the fourth movable member opposing the sixth pushing portion, the fourth movable magnetic body held by the fourth movable member is tilted, the corresponding stopper portion prevents the second movable magnetic body from tilting, and the second movable magnetic body and the fourth movable magnetic body become separated from each other. When the operation member keeps being tilted further in the second direction, the fifth pushing portion pushes the third movable member opposing the fifth pushing portion, the third movable magnetic body held by the third movable member is tilted, the corresponding stopper portion prevents the first movable magnetic body from tilting, and the first movable magnetic body and the third movable magnetic body become separated from each other.

According to the operation device having the above-described configuration, the fourth movable magnetic body, which is tilting, and the second movable magnetic body, stopped by the stopper portion, become easily separated from each other. Likewise, when the operation member keeps being tilted further in the second direction, the third movable magnetic body, which is tilting, and the first movable magnetic body, stopped by the stopper portion, become easily separated from each other, the first and third movable magnetic bodies being located on the side of the tilt shaft opposite to the side on which the second and fourth movable magnetic bodies are located. Thus, in each position, the paired second and fourth movable magnetic bodies can become easily separated from each other and the paired first and third movable magnetic bodies can become easily separated from each other. Thus, the operation device with tactile feedback can be easily manufactured.

In the operation device according to the invention, an urging member capable of urging a corresponding one of the movable magnetic bodies toward the opposing magnetic body is disposed on at least one of the movable members.

According to the operation device having the above-described configuration, when an operator performs a tilt operation toward a side on which the urging members are disposed, the urging members urge the movable magnetic bodies against a force in the direction in which the movable magnetic bodies are to tilt (tilt operation direction). Thus, an operator can receive a response such as a heavier operation load or more distinct tactile feedback, and thus high maneuverability.

In the operation device according to the invention, the urging member is integrated with the at least one of the movable members on which the urging member is disposed.

This configuration dispenses with the use of additional separate urging members and facilitates positioning of the urging members at intended positions. Thus, an operation device with tactile feedback can be more easily manufactured.

The operation device according to the invention further includes a holding member that does not move in association with a tilt operation of the operation member. The holding member holds the opposing magnetic body.

According to the operation device having the above-described configuration, the opposing magnetic bodies can be fixed at predetermined positions regardless of whether an operator performs a tilt operation. Thus, the movable magnetic bodies can be stably pulled apart from the corresponding opposing magnetic bodies.

In the operation device according to the invention, the pair of movable magnetic bodies are curved so that end surfaces of one of the movable magnetic bodies face end surfaces of the other one of the movable magnetic bodies.

According to the operation device having the above-described configuration, a magnetic flux caused by the opposing magnetic body (permanent magnet) is confined to a further extent to a range between the paired movable magnetic bodies, whereby the force of attraction between the paired movable magnetic bodies can be enhanced. Thus, an operator can receive a response such as a heavier operation load or more distinct tactile feedback. Conversely, to provide an equivalent response such as an equivalent operation load or equivalent tactile feedback, each pair of movable magnetic bodies or opposing magnetic bodies can be made smaller.

In the operation device according to the invention, the pair of movable magnetic bodies are disposed at such positions at which a force of attraction remains being exerted between the pair of movable magnetic bodies when the pair of movable magnetic bodies become separated from each other as a result of the operation member being tilted.

According to the operation device having the above-described configuration, when unloaded with a tilting force from the operator, the paired movable magnetic bodies that have been pulled apart from each other start attracting each other again due to the force of attraction between each other. This configuration allows the operation member to automatically return to the reference position without using a member for automatic return.

A vehicular shift device according to the invention includes the above-described operation device, a controlling unit that transmits signals to onboard devices upon receipt of signals from the operation device, a shift knob engaged with the operation member of the operation device and gripped by the operator, and position detecting means for detecting which of the plurality of positions the operation member is disposed in.

According to the operation device having the above-described configuration, the operation device capable of shifting to each position is preferably usable for shift positioning (for having a shift pattern) of the vehicular shift device. The vehicular shift device can thus perform a gearshift operation that provides tactile feedback. In contrast to an existing example, the vehicular shift device does not include a sliding mechanism at a portion that causes tactile feedback, whereby the vehicular shift device can have high durability.

In the operation device according to the invention, at the shifting from the reference position to any of the multiple positions, one of the movable magnetic bodies is kept being tilted in the first direction and the other one of the movable magnetic bodies is prevented from tilting by a corresponding one of the stopper portions. Thus, in each position, the pair of movable magnetic bodies are pulled apart and become separated from each other, so that the relationship between the movable magnetic bodies changes from a strongly attracted state to a weakly attracted state. Thus, an operator can receive tactile feedback. In contrast to an existing example, the operation device does not include a sliding mechanism at a portion that causes tactile feedback, whereby the operation device can have high durability.

In the vehicular shift device according to the invention, the operation device capable of shifting to each position is preferably usable for shift positioning (for having a shift pattern) of the vehicular shift device. The vehicular shift device can thus perform a gearshift operation that provides tactile feedback. In contrast to an existing example, the vehicular shift device does not include a sliding mechanism at a portion that causes tactile feedback, whereby the vehicular shift device can have high durability.

### BRIEF DESCRIPTION OF THE DRAWINGS

Fig. 1 is a perspective view of a vehicular shift device including an operation device according to a first embodiment of the invention;
Figs. 2A and 2B illustrate a vehicular shift device including an operation device according to the first embodiment of the invention, where Fig. 2A is a front view of the vehicular shift device viewed from the Y2 side illustrated in Fig. 1 and Fig. 2B is a side view of the vehicular shift device viewed from the X2 side illustrated in Fig. 1;
Fig. 3 is an exploded perspective view of a vehicular shift device including the operation device according to the first embodiment of the invention;
Figs. 4A and 4B specifically illustrate an operation of the vehicular shift device including the operation device according to the first embodiment of the invention, where Fig. 4A is a plan view of the vehicle shift positions and Fig. 4B is a plan view of the shift knob position;
Fig. 5 is a perspective view of the operation device according to the first embodiment of the invention;
Figs. 6A and 6B illustrate the operation device according to the first embodiment of the invention, where Fig. 6A is a front view of the operation device viewed from the Y2 side illustrated in Fig. 5 and Fig. 6B is a side view of the operation device viewed from the X1 side illustrated in Fig. 5;
Fig. 7 illustrates the operation device according to the first embodiment of the invention and is a perspective view from which a frame of a support body and a second tilt shaft illustrated in Fig. 5 are omitted;
Figs. 8A and 8B illustrate the operation device according to the first embodiment of the invention, where Fig. 8A is a front view of the operation device viewed from the Y2 side of Fig. 7 and Fig. 8B is a side view of the operation device viewed from the X1 side of Fig. 7;
Figs. 9A and 9B illustrate the operation device according to the first embodiment of the invention, where Fig. 9A is a perspective view of the operation member and Fig. 9B is a side view of the operation member viewed from the X1 side of Fig. 9A;
Figs. 10A and 10B illustrate the operation device according to the first embodiment of the invention, where Fig. 10A is a top perspective view of a frame serving as a support body and Fig. 10B is a bottom perspective view of the frame;
Figs. 11A and 11B illustrate the operation device according to the first embodiment of the invention, where Fig. 11A is a front view of the operation device from which movable magnetic bodies and opposing magnetic bodies illustrated in Fig. 8A are omitted and Fig. 11B is a side view of the operation device from which the movable magnetic bodies and the opposing magnetic bodies illustrated in Fig. 8B are omitted;
Figs. 12A, 12B, and 12C are schematic diagrams for illustrating an operation of the operation device according to the first embodiment of the invention, where Fig. 12A illustrates the operation device in a reference position, Fig. 12B illustrates the operation device in another position after being tilted in a first direction, and Fig. 12C illustrates the operation device in another position after being tilted further in the first direction;
Figs. 13A, 13B, and 13C are schematic diagrams illustrating an operation of the operation device according to the first embodiment of the invention, where Fig. 13A illustrates the operation device in the reference position, Fig. 13B illustrates the operation device in another position after being tilted in a second direction, and Fig. 13C illustrates the operation device in another position after being tilted further in the second direction than the operation device illustrated in Fig. 13B;
Figs. 14A and 14B illustrate an operation device according to the second embodiment of the invention, where Fig. 14A is a perspective view of an operation member and Fig. 14B is a side view of the operation member viewed from the X1 side in Fig. 14A;
Fig. 15 illustrates the operation device according to the second embodiment of the invention and is a side view of the operation device compared with the operation device according to the first embodiment illustrated in Fig. 8B;
Figs. 16A, 16B, and 16C are schematic diagrams illustrating an operation of the operation device according to the second embodiment of the invention, where Fig. 16A illustrates the operation device in the reference position, Fig. 16B illustrates the operation device in another position after being tilted in a first direction, and Fig. 16C illustrates the operation device in another position after being tilted further in the first direction than the operation device illustrated in Fig. 16B;
Figs. 17A, 17B, and 17C are schematic diagrams illustrating the movement of the operation device according to the second embodiment of the invention, where Fig. 17A illustrates the operation device in the reference position, Fig. 17B illustrates the operation device in another position after being tilted in a second direction, and Fig. 17C illustrates the operation device in another position after being tilted further in the second direction than the operation device illustrated in Fig. 17B; and
Fig. 18 is an enlarged cross-sectional view of an automatic transmission shifting device according to an existing example taken vertically, in the state where a shift lever is disposed in a neutral range (N range).

### DESCRIPTION OF THE PREFERRED EMBODIMENTS

Referring now to the drawings, embodiments of the invention are described below.

### First Embodiment

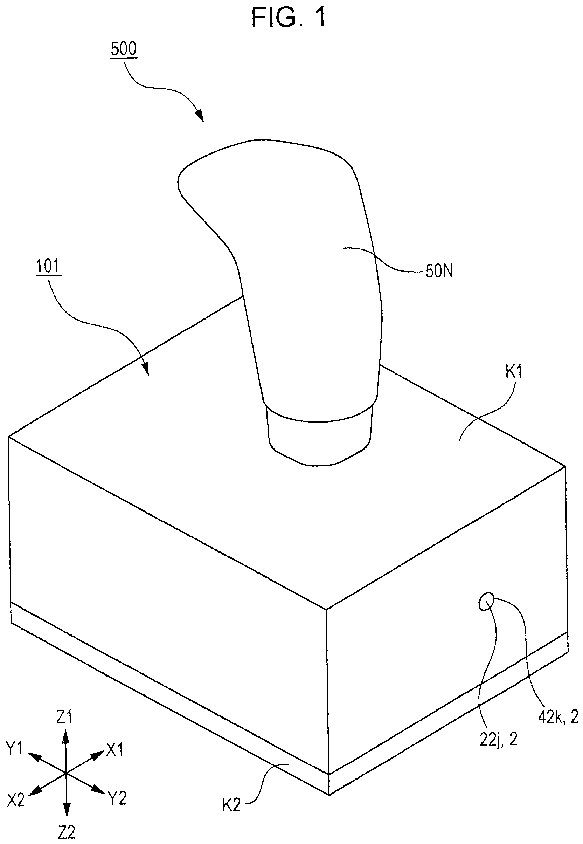

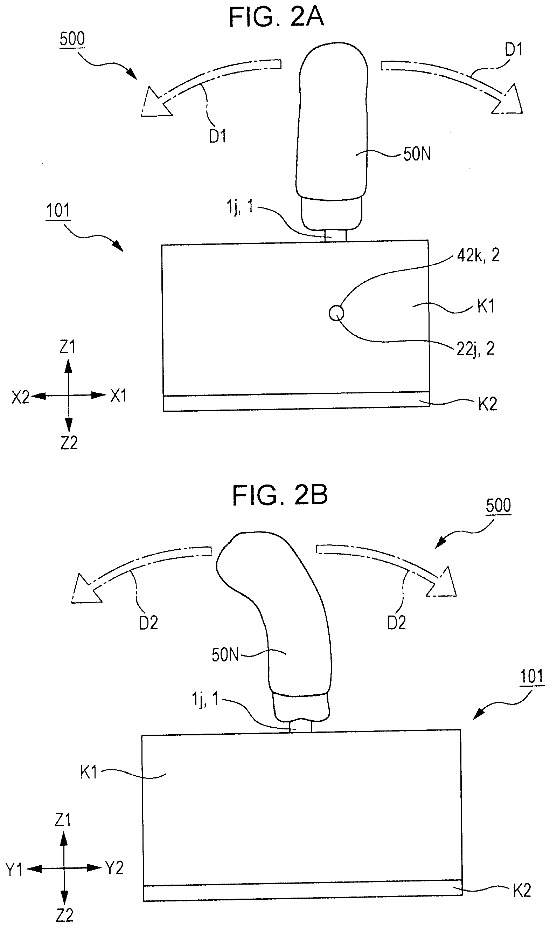

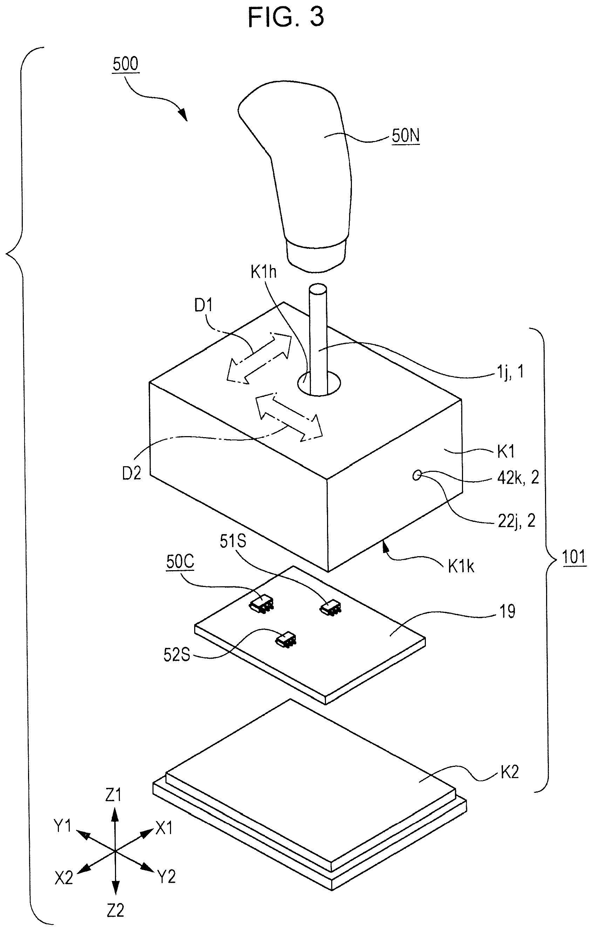

In a first embodiment of the invention, an operation device 101 and a vehicular shift device 500 are described. The vehicular shift device 500 including the operation device 101 is described first. Fig. 1 is a perspective view of the vehicular shift device 500 including the operation device 101 according to the first embodiment of the invention. Figs. 2A and 2B illustrate the vehicular shift device 500 including the operation device 101 according to the first embodiment of the invention, where Fig. 2A is a front view of the vehicular shift device 500 viewed from the Y2 side illustrated in Fig. 1 and Fig. 2B is a side view of the vehicular shift device 500 viewed from the X2 side illustrated in Fig. 1. Fig. 3 is an exploded perspective view of the vehicular shift device 500 including the operation device 101 according to the first embodiment of the invention.

The vehicular shift device 500 including the operation device 101 according to the first embodiment of the invention has an external appearance as illustrated in Fig. 1 and Figs. 2A and 2B. As illustrated in Fig. 3, the vehicular shift device 500 includes a shift knob 50N, grasped by an operator, an operation device 101, operable in multiple directions by an operator tilting the shift knob 50N, a controlling unit 50C, which transmits signals to onboard devices in response to signals from the operation device 101, and position detecting means (not illustrated) for detecting which of multiple positions the operation member 1 of the operation device 101 is disposed in. The vehicular shift device 500 is mounted on a vehicle and is used to perform a vehicle gearshift operation by being tilted in a lateral direction D1 (X direction illustrated in Fig. 3) and a front-rear direction D2 (Y direction illustrated in Fig. 3) perpendicular to the lateral direction D1.

As illustrated in Fig. 1 to Fig. 3, the shift knob 50N of the vehicular shift device 500 is long and narrow so that an operator can grasp easily. As illustrated in Figs. 1, 2A, and 2B, the shift knob 50N is fitted onto the operation member 1 so as to cover an operation shaft 1j of the operation member 1 of the operation device 101 illustrated in Fig. 3.

The controlling unit 50C of the vehicular shift device 500 is constituted of an integrated circuit (IC) and mounted on a circuit board 19 (see Fig. 3) accommodated in a box-shaped casing K1 of the operation device 101. The controlling unit 50C is connected to onboard devices using connectors, not illustrated, and transmits position data signals to onboard devices, the signals indicating the positions of the shift knob 50N located after being tilted. In response to the position data signals, the onboard devices perform operations corresponding to the shift pattern and the current position of the shift knob 50N corresponding to the shift pattern is displayed on a display unit installed on, for example, an instrument panel.

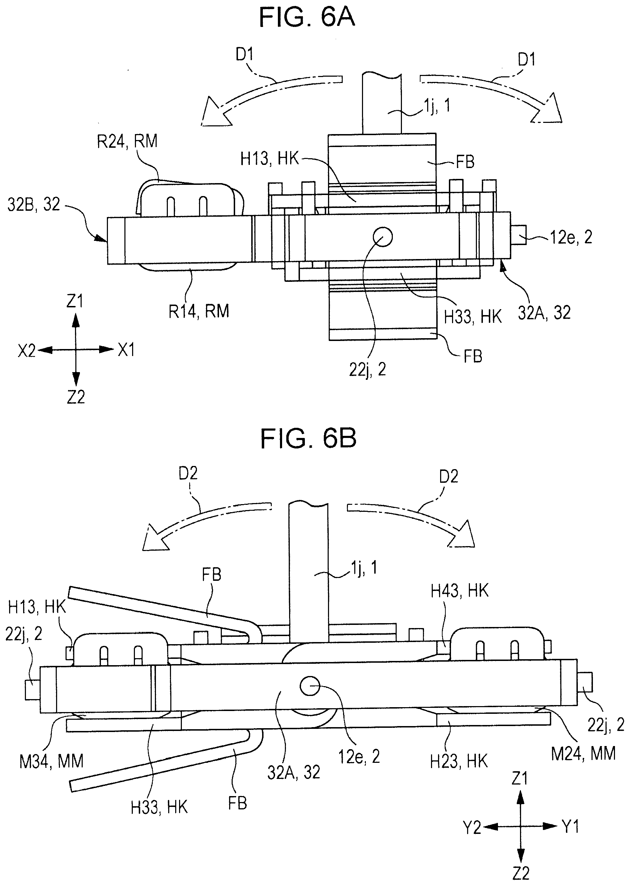

Although not illustrated, a rotary variable resistor including a board on which a resistor pattern is formed and a wiper that slides over the resistor pattern is used as the position detecting means of the vehicular shift device 500. The position detecting means includes a first detector, which detects which of multiple positions the operation member 1 is disposed in after being tilted in the lateral direction D1, and a second detector, which detects which of the multiple positions the operation member 1 is disposed in after being tilted in the front-rear direction D2. The first detector and the second detector are accommodated in the box-shaped casing K1 of the operation device 101. As described below, the first detector is engaged with a second tilt shaft 22j (see Fig. 6B, below) of the support body 2 to detect the rotation angle of the second tilt shaft 22j and the second detector is engaged with a tilt shaft (first tilt shaft) 12e (see Fig. 6A, below) of a support body 2 to detect the rotation angle of the tilt shaft 12e.

The position detecting means also includes a first signal processor 51S and a second signal processor 52S, which respectively process signals from the first position detector and the second position detector. As illustrated in Fig. 3, the first signal processor 51S and the second signal processor 52S are mounted on the circuit board 19. The first signal processor 51S and the second signal processor 52S are respectively connected to the first position detector and the second position detector with flexible printed circuits (FPCs), not illustrated, interposed therebetween. The first signal processor 51S calculates the rotation angle of the second tilt shaft 22j on the basis of the signal from the first position detector and detects a movement of the operation member 1 in the lateral direction D1 from the calculated rotation angle. Similarly, the second signal processor 52S calculates the rotation angle of the tilt shaft 12e on the basis of the signal from the second position detector and detects a movement of the operation member 1 in the front-rear direction D2 from the calculated rotation angle.

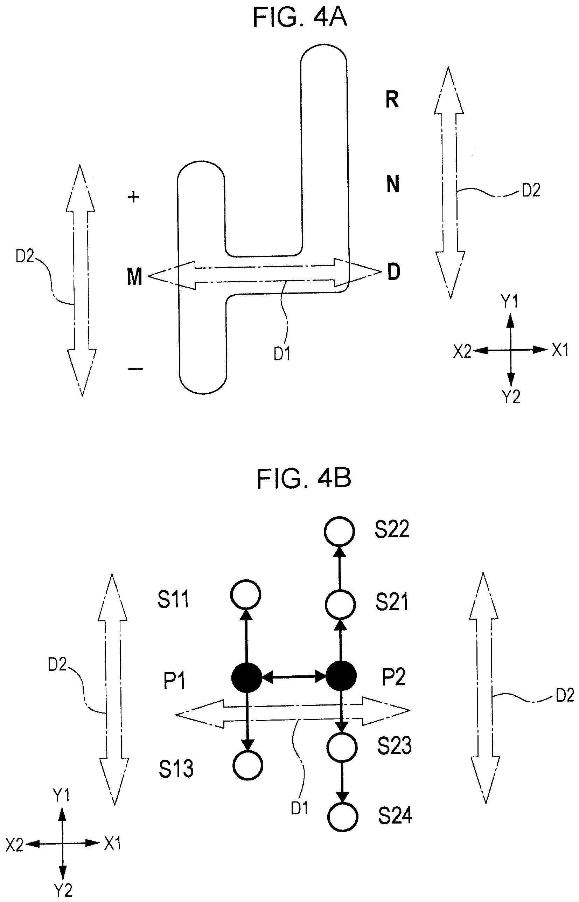

Referring now to Figs. 4A and 4B, the gearshift operation of the vehicular shift device 500 including the operation device 101 according to the first embodiment of the invention is specifically described. Figs. 4A and 4B specifically illustrate an operation of the vehicular shift device 500 including the operation device 101 according to the first embodiment of the invention, where Fig. 4A is a plan view of the vehicle shift positions (shift pattern) and Fig. 4B is a plan view of the position of the shift knob 50N. The shift pattern illustrated in Fig. 4A is displayed on a display unit installed in the above-described instrument panel or the like. The position illustrated in Fig. 4B is a schematic illustration of the position to which the operation member 1 has been shifted after the shift knob 50N (operation member 1) has been operated.

The vehicular shift device 500 according to the first embodiment of the invention is used, not in a mechanically controlled vehicle in which the shift knob 50N is directly connected to a transmission, but in an electronically controlled vehicle. Thus, the vehicular shift device 500 performs a vehicle gearshift operation merely upon receipt of shift position data signals transmitted from the operation device 101. The shift position is indicated in the shift pattern displayed on a display unit installed on the above-described instrument panel or the like.

From the state where, for example, the shift knob 50N (operation member 1) is disposed in a second position P2 illustrated in Fig. 4B and the shift position is positioned in the neutral mode "N" illustrated in Fig. 4A, the shift knob 50N is tilted in the Y1 direction to be shifted to a front first position S21 illustrated in Fig. 4B. Then, a data signal indicating that the shift position has been shifted to the reverse mode "R" illustrated in Fig. 4A is transmitted to the vehicle, so that the vehicle performs a gearshift operation. Then, upon completion of the operation, the operator moves his/her hand off the shift knob 50N. Thus, the shift knob 50N is automatically returned to the second position P2.

Subsequently, when the shift knob 50N disposed in the second position P2 is tilted in the Y2 direction to be sequentially shifted to the rear first position S23 and the rear second position S24 illustrated in Fig. 4B, the shift position that have been in the reverse mode "R" is sequentially shifted to the neutral mode "N" and the drive mode "D" illustrated in Fig. 4A. Upon receipt of this operation, a data signal indicating that the shift position has been shifted to the drive mode "D" illustrated in Fig. 4A is transmitted to the vehicle, so that the vehicle performs a gearshift operation. Then, upon completion of the operation, the operator moves his/her hand off the shift knob 50N. Thus, the shift knob 50N is automatically returned to the second position P2.

In this manner, when performing an automatic operation including a reverse mode "R", a neutral mode "N", and a drive mode "D", the vehicular shift device 500 assigns the automatic operation position, serving as a reference position, to the second position P2 of the operation member 1 of the operation device 101. When, as described above, the shift position is switched from the reverse mode "R" to the drive mode "D", the operation member 1 of the operation device 101 is allowed to tilt in the Y2 direction in two steps, to the rear first position S23 and then to the rear second position S24. Similarly, when the shift position is switched from the drive mode "D" to the reverse mode "R", the operation member 1 of the operation device 101 is allowed to tilt in the Y1 direction in two steps, to the front first position S21 and then to the front second position S22 illustrated in Fig. 4B. The Y direction in which the operation member 1 of the operation device 101 is moved, or, a tilt direction is designated as a front-rear direction D2 of the vehicle gearshift operation.

On the other hand, when, for example, the shift position is located in the drive mode "D" illustrated in Fig. 4A and the shift knob 50N, disposed in the second position P2, is tilted in the X2 direction so that the operation member 1 is shifted to the first position P1 illustrated in Fig. 4B, the shift position located in the drive mode "D" is shifted to the manual mode "M" illustrated in Fig. 4A. At this time, the operation member 1 (shift knob 50N) remains at the first position P1 and keeps being tilted even after the operator moves his/her hand off the shift knob 50N.

Subsequently, when the shift knob 50N located at the first position P1 is tilted in the Y1 direction to be shifted to a frontward position S11 illustrated in Fig. 4B, a data signal indicating that the shift position has been shifted to a shift-up mode "+" illustrated in Fig. 4A is transmitted to the vehicle, so that the vehicle performs a shift-up operation. Similarly, when the shift knob 50N located at the first position P1 is tilted in the Y2 direction to be shifted to a rearward position S13 illustrated in Fig. 4B, a data signal indicating that the shift position has been shifted to a shift-down mode "-" illustrated in Fig. 4A is transmitted to the vehicle, so that the vehicle performs a shift-down operation.

In this manner, when performing a manual operation including the shift-up mode "+" and the shift-down mode "-", the vehicular shift device 500 assigns the manual operation position, serving as the reference position, to the first position P1 of the operation member 1 of the operation device 101. The X direction in which the operation member 1 of the operation device 101 is moved between the first position P1 and the second position P2, or, a tilt direction is designated as a lateral direction D1 of the vehicle gearshift operation. For ease of understanding, Figs. 2A and 2B and Fig. 3 also include illustrations of the lateral direction D1 and the front-rear direction D2 for the tilt operation.

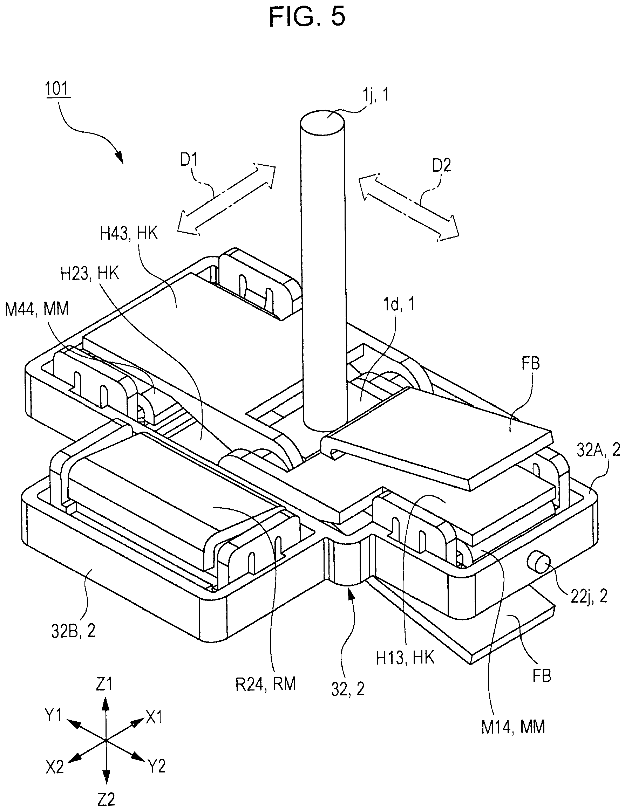

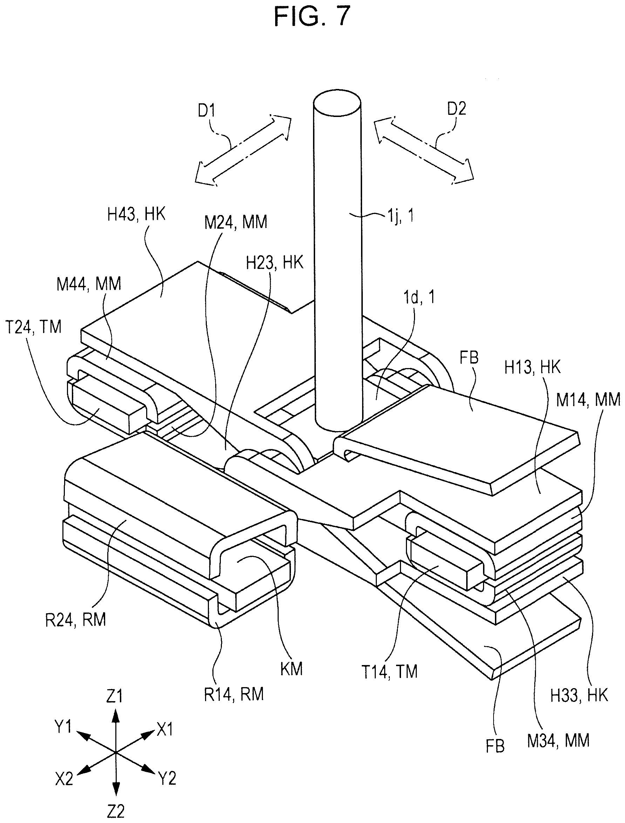

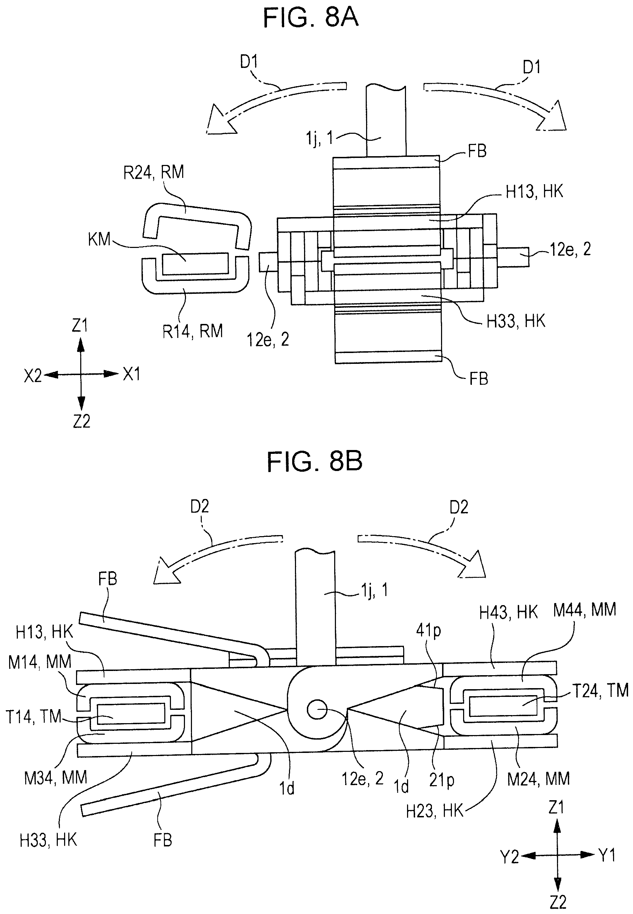

Now, the operation device 101 is described. Fig. 5 is a perspective view of the operation device 1 according to the first embodiment of the invention. Figs. 6A and 6B illustrate the operation device 101 according to the first embodiment of the invention, where Fig. 6A is a front view of the operation device 101 viewed from the Y2 side illustrated in Fig. 5 and Fig. 6B is a side view of the operation device 101 viewed from the X1 side illustrated in Fig. 5. Fig. 7 is a perspective view of the operation device 101 from which a frame 32 of a support body 2 and a second tilt shaft 22j illustrated in Fig. 5 are omitted. Fig. 8A is a front view of the operation device 101 viewed from the Y2 side of Fig. 7 and Fig. 8B is a side view of the operation device 101 viewed from the X1 side of Fig. 7. Figs. 5 to 8B illustrate the operation member 1 located at the second position P2 in the lateral direction D1, which is the reference position at which the operation member 1 is not tilted in the front-rear direction D2.

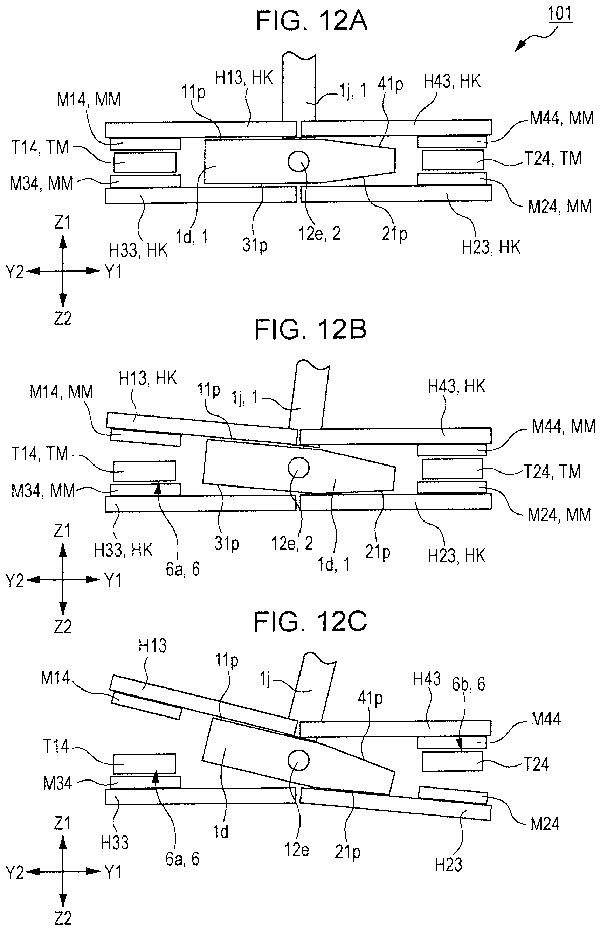

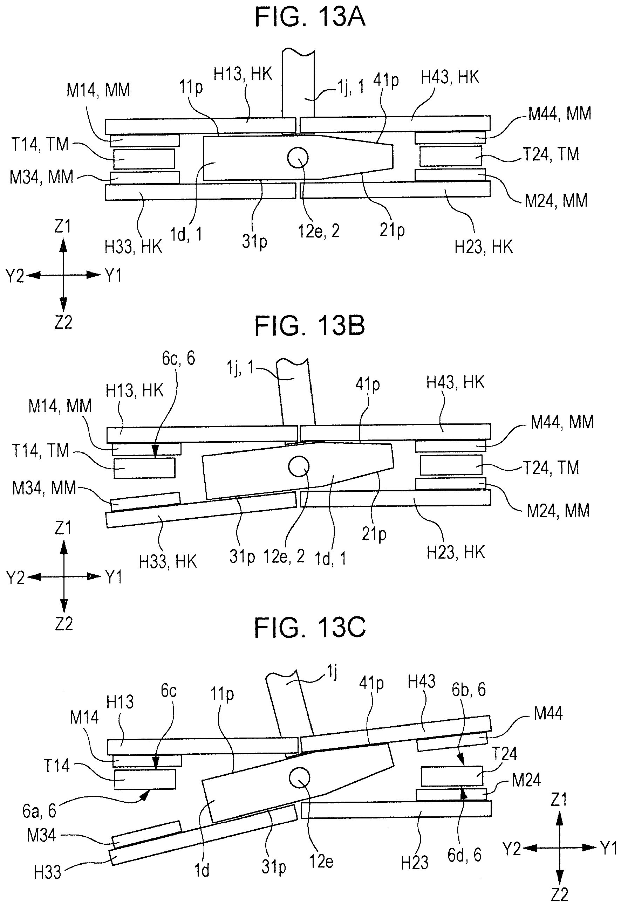

The operation device 101 according to the first embodiment of the invention has an outward appearance as illustrated in Figs. 5, 6A, and 6B. The operation device 101 includes an operation member 1, tiltable by being operated by the operator, and a support body 2, which supports the operation member 1 so as to allow the operation member 1 to tilt, as illustrated in Figs. 5, 6A, and 6B. The operation device 101 also includes, as illustrated in Fig. 7 and Fig. 8B, multiple movable magnetic bodies MM, which are also tilted in the front-rear direction D2 (Y direction in Fig. 8) together with the operation member 1, opposing magnetic bodies TM each interposed between a pair of opposing movable magnetic bodies MM, and a stopper portion 6 (see Figs. 12A to 12C and Figs. 13A to 13C, below), which stops the opposing magnetic bodies TM being tilted. The operation device 101 according to the first embodiment of the invention also includes, as illustrated in Fig. 8B, multiple movable members HK, which hold the movable magnetic bodies MM and are tilted in association with the movable magnetic bodies MM, and urging members FB, which are disposed on some of the movable members HK and capable of urging the movable magnetic bodies MM toward the opposing magnetic bodies TM. The operation device 101 also includes, as illustrated in Fig. 7, a tilt-side magnetic body KM that is tilted in a lateral direction D1 (X direction illustrated in Fig. 7) together with the operation member 1, and a pair of stationary magnetic bodies RM opposing each other with the tilt-side magnetic body KM interposed therebetween. The operation device 101 also includes, as illustrated in Fig. 3, a box-shaped casing K1, disposed so as to cover other components except the shift knob 50N, a cover K2, covering an opening K1k of the casing K1, and a circuit board 19, accommodated in the casing K1 and on which the controlling unit 50C is mounted. Upon receipt of a tilt operation from an operator, the operation device 101 is operable in multiple directions so as to allow the operation member 1 to tilt in the lateral direction D1 or shift between the first position P1 and the second position P2, and to tilt in the front-rear direction D2 (Y1 direction and Y2 direction illustrated in Fig. 4) perpendicular to the lateral direction D1.

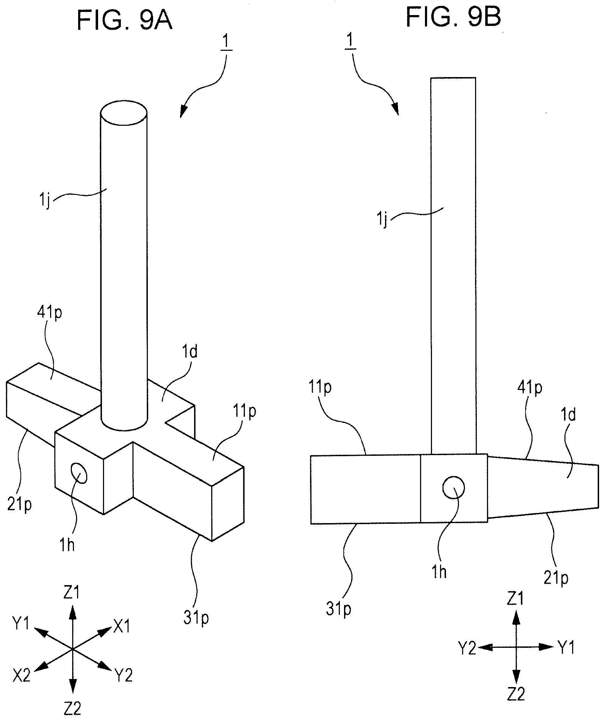

The operation member 1 of the operation device 101 is described first. Figs. 9A and 9B illustrate the operation member 1, where Fig. 9A is a perspective view of the operation member 1 and Fig. 9B is a side view of the operation member 1 where the operation member 1 illustrated in Fig. 9A is viewed from the X1 side.

The operation member 1 is composed of a synthetic resin such as polybutylene terephtalate (PBT) and formed into a shape that includes, as illustrated in Figs. 9A and 9B, a pillar-shaped operation shaft 1j, extending in the vertical direction (Z direction illustrated in Fig. 5), and a base portion 1d, disposed at an end portion of the operation shaft 1j and extending in a plane through which the axis of the operation shaft 1j passes. As described above, the operation shaft 1j of the operation member 1 is covered with the shift knob 50N of the vehicular shift device 500.

As illustrated in Figs. 9A and 9B, the base portion 1d of the operation member 1 extends leftward and rightward (in the Y1 direction and Y2 direction illustrated in Figs. 9A and 9B) from the operation shaft 1j. The base portion 1d has, at a middle portion, a through hole 1h extending in a direction (X direction illustrated in Figs. 9A and 9B) perpendicular to the direction (Y direction illustrated in Figs. 9A and 9B) in which the base portion 1d extends. A tilt shaft (first tilt shaft) 12e of the support body 2, which renders the operation member 1 tiltable, is inserted and fitted into the through hole 1h. The base portion 1d is also tilted in association with the tilt operation of the operation member 1 in the front-rear direction D2 (Y direction illustrated in Fig. 7).

As illustrated in Fig. 8B, in the assembled form of the operation device 101, the base portion 1d is disposed between the multiple movable members HK so that, when the base portion 1d rotates around the axis of the tilt shaft 12e, the base portion 1d comes into contact with the movable members HK. As illustrated in Fig. 9B, the base portion 1d includes a first pushing portion 11p, facing one movable member HK (a first movable member H13, described below) while being arranged parallel to the movable member HK, and a second pushing portion 21p, facing one movable member HK (a second movable member H23, described below) at an angle with respect to the movable member HK. The first pushing portion 11p and the second pushing portion 21p are disposed on both sides of the operation shaft 1j with the tilt shaft 12e interposed therebetween. According to the first embodiment of the invention, the base portion 1d also includes a third pushing portion 31p, facing one movable member HK (a third movable member H33, described below) while being arranged parallel to the movable member HK, and a fourth pushing portion 41p, facing one movable member HK (a fourth movable member H43, described below) while being inclined with respect to the movable member HK. The third pushing portion 31p and the fourth pushing portion 41p are disposed on both sides of the operation shaft 1j with the tilt shaft 12e interposed therebetween.

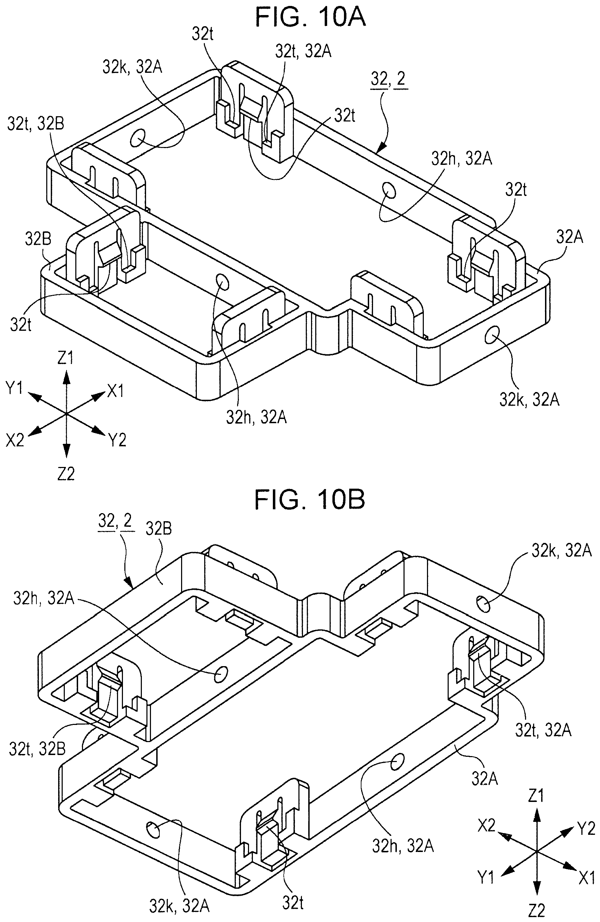

Now, the support body 2 of the operation device 101 is described. Figs. 10A and 10B illustrate the support body 2, where Fig. 10A is a top perspective view of a frame 32 serving as the support body 2 and Fig. 10B is a bottom perspective view of the frame 32.

As illustrated in Figs. 6A and 6B, the support body 2 mainly includes a tilt shaft (first tilt shaft) 12e, which renders the operation member 1 tiltable (tilt operation in the front-rear direction D2), a second tilt shaft 22j, whose axial direction is perpendicular to the tilt shaft 12e, a frame 32, which rotates around the axis of the second tilt shaft 22j in association with the tilt operation of the operation member 1 (tilt operation in the lateral direction D1), and bearing portions 42k (see Fig. 3) disposed in the casing K1. The bearing portions 42k allow the second tilt shaft 22j to be inserted thereinto and support the frame 32 so as to allow the frame 32 to rotate.

The frame 32 of the support body 2 is composed of a synthetic resin such as polybutylene terephthalate (PBT) and formed into a shape that includes, as illustrated in Figs. 10A and 10B, a first frame portion 32A, having a rectangular frame shape, and a second frame portion 32B, continuous with a side wall (long-side wall) of the first frame portion 32A, the side wall being located on one of the sides of the first frame portion 32A facing in the cross direction (X2 direction illustrated in Figs. 10A and 10B). In the assembled form of the operation device 101, the base portion 1d of the operation member 1, the multiple opposing magnetic bodies TM, and part of the tilt-side magnetic body KM are accommodated inside the frame 32.

As illustrated in Figs. 10A and 10B, the first frame portion 32A of the frame 32 has a hole 32h on each of the opposing long-side walls. The tilt shaft 12e is inserted into these holes 32h (see Fig. 6) and is rotatably supported by the frame 32. The operation member 1 is thus rotatable in the front-rear direction D2 around the tilt shaft 12e, serving as the axis (center of rotation), so that the base portion 1d is also rotatable around the axis of the tilt shaft 12e. In other words, the first frame portion 32A is a member (holding member) that does not move in association with the tilt operation of the operation member 1 in the front-rear direction D2 and does not tilt in the front-rear direction D2.

As illustrated in Figs. 10A and 10B, the first frame portion 32A has a hole 32k on each of the side walls (short-side walls) located on the sides of the first frame portion 32A opposing in the longitudinal direction (Y direction illustrated in Figs. 10A and 10B). The second tilt shaft 22j is inserted into these holes 32k (see Fig. 6A). In the assembled form of the operation device 101, the second tilt shaft 22j is inserted into and rotatably supported by the bearing portions 42k in the casing K1 (see Fig. 3). Thus, the frame 32 is rotatable in the lateral direction D1 around the second tilt shaft 22j serving as the center of rotation (axis) and the operation member 1 engaged with the frame 32 also rotates around the second tilt shaft 22j, serving as the axis. In other words, the support body 2 supports the operation member 1 while allowing the operation member 1 to tilt, using the tilt shaft (first tilt shaft) 12e, the second tilt shaft 22j, the frame 32, and the bearing portions 42k.

As illustrated in Figs. 10A and 10B, hook portions 32t, which jut into the inner side of the first frame portion 32A, are disposed on the long-side walls of the first frame portion 32A. The hook portions 32t are arranged so that two pairs of vertically (Z direction illustrated in Figs. 10A and 10B) opposing hook portions 32t oppose each other in the lateral direction (X direction illustrated in Figs. 10A and 10B) and another two pairs of vertically opposing hook portions 32t oppose each other in the lateral direction. The former two pairs and the latter two pairs are arranged in the longitudinal direction (Y direction illustrated in Figs. 10A and 10B). Although not illustrated in detail, end portions of the opposing magnetic bodies TM are fitted to these hook portions 32t, so that the opposing magnetic bodies TM are held by the first frame portion 32A (frame 32).

As illustrated in Figs. 10A and 10B, hook portions 32t, which jut into the inner side of the second frame portion 32B, are disposed on the second frame portion 32B of the frame 32. The hook portions 32t are arranged so that two pairs of vertically (Z direction illustrated in Figs. 10A and 10B) opposing hook portions 32t oppose each other in the longitudinal direction (Y direction illustrated in Figs. 10A and 10B). Although not illustrated in detail, end portions of the tilt-side magnetic body KM are fitted to these hook portions 32t, so that the tilt-side magnetic body KM is held by the second frame portion 32B (frame 32).

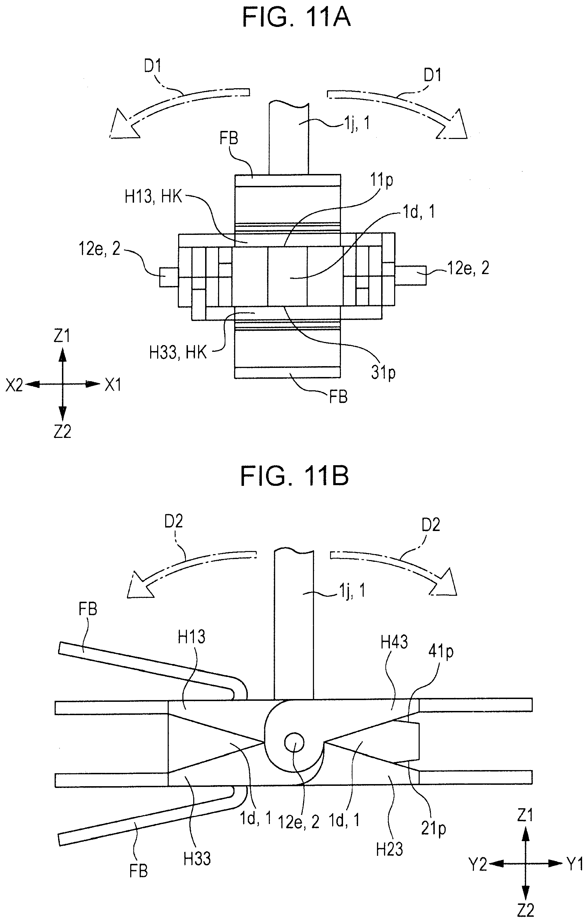

Now, the movable members HK and the urging members FB of the operation device 101 are described. Fig. 11A is a front view of the operation device 101 from which the movable magnetic bodies MM and the opposing magnetic bodies TM illustrated in Fig. 8A are omitted and Fig. 11B is a side view of the operation device 101 from which the movable magnetic bodies MM and the opposing magnetic bodies TM illustrated in Fig. 8B are omitted.

The movable members HK of the operation device 101 are formed of a non-magnetic material, which is a synthetic resin such as polybutylene terephthalate (PBT). The movable members HK include a first movable member H13, disposed so as to oppose the first pushing portion 11p of the base portion 1d as illustrated in Fig. 11A, a second movable member H23, disposed so as to oppose the second pushing portion 21p of the base portion 1d as illustrated in Fig. 11B, a third movable member H33, disposed so as to oppose the third pushing portion 31p of the base portion 1d as illustrated in Fig. 11A, and a fourth movable member H43, disposed so as to oppose the fourth pushing portion 41p of the base portion 1d, as illustrated in Fig. 11B. These movable members HK tilt in association with the tilt operation of the operation member 1.

As illustrated in Fig. 11B, the first movable member H13 and the second movable member H23 of the movable members HK are disposed on both sides of the tilt shaft 12e (see Fig. 8B) of the support body 2. The first movable member H13 and the second movable member H23 are loosely and rotatably fitted to the tilt shaft 12e at their one ends so that the first movable member H13 and the second movable member H23 rotate around the tilt shaft 12e. When the operation member 1 is operated so as to tilt in a first direction (Y1 direction illustrated in Fig. 11B), the first pushing portion 11p of the base portion 1d, tilted in the tilt operation direction (tilt operation in the first direction) of the base portion 1d, pushes the first movable member H13 opposing the first pushing portion 11p. When the operation member 1 is kept being tilted further in the first direction, the second pushing portion 21p of the base portion 1d, located opposite the first pushing portion 11p (which is on the Y2 side in Fig. 11B) across the tilt shaft 12e, that is, located on the Y1 side in Fig. 11B, pushes the second movable member H23 opposing the second pushing portion 21p.

As illustrated in Fig. 11B, the third movable member H33 and the fourth movable member H43 of the movable members HK are disposed on both sides of the tilt shaft 12e (see Fig. 8B) of the support body 2. The third movable member H33 and the fourth movable member H43 are loosely and rotatably fitted to the tilt shaft 12e at their one ends so that the third movable member H33 and the fourth movable member H43 rotate around the tilt shaft 12e. When the operation member 1 is operated so as to tilt in a second direction (Y2 direction illustrated in Fig. 11B), the third pushing portion 31p of the base portion 1d, tilted in the tilt operation direction (tilt operation in the second direction) of the base portion 1d, pushes the third movable member H33 opposing the third pushing portion 31p. When the operation member 1 is kept being tilted further in the second direction, the fourth pushing portion 41p of the base portion 1d, located opposite the third pushing portion 31p (which is on the Y2 side in Fig. 11B) across the tilt shaft 12e, that is, located on the Y1 side in Fig. 11B, pushes the fourth movable member H43 opposing the fourth pushing portion 41p.

As illustrated in Fig. 7 and Figs. 8A and 8B, the urging members FB of the operation device 101 are disposed on the first movable member H13 and the third movable member H33 so as to be respectively integrated with the first movable member H13 and the third movable member H33. This configuration thus dispenses with the use of additional separate urging members FB and facilitates positioning of the urging members FB at intended positions.

Although not illustrated, a restraint member is disposed adjacent to an open end portion of each of the urging members FB. The restraint member is capable of coming into contact with the corresponding urging member FB. When the open end portion of one of the urging members FB and the restraint member come into contact with each other in response to the tilt operation of the movable members HK, the urging member FB restrains the tilt operation of the movable members HK. Thus, the urging member FB urges the movable magnetic bodies MM toward the opposing magnetic bodies TM against a force in the direction (tilt operation direction) in which the movable magnetic bodies MM are to tilt. Thus, when an operator performs a tilt operation toward the sides on which the urging members FB are disposed, the operator can receive a response such as a heavier operation load or more distinct tactile feedback.

Now, the tilt-side magnetic body KM and the stationary magnetic bodies RM of the operation device 101 are described. As illustrated in Fig. 7 and Fig. 8A, the tilt-side magnetic body KM of the operation device 101 is composed of a rectangular plate-shaped permanent magnet. Although not illustrated in detail, the tilt-side magnetic body KM is accommodated in the second frame portion 32B illustrated in Figs. 10A and 10B and fixed to the frame 32 using the hook portions 32t. The tilt-side magnetic body KM rotates in the lateral direction D1 in association with the rotation of the frame 32 in the lateral direction D1 around the second tilt shaft 22j, serving as the center of rotation (axis). Specifically, according to the first embodiment of the invention, the tilt-side magnetic body KM rotates around the second tilt shaft 22j, serving as the center of rotation (axis), in association with the movement of the operation device 101 between the first position P1 and the second position P2.

The stationary magnetic bodies RM of the operation device 101 are composed of a soft magnet material such as iron. As illustrated in Fig. 7, the stationary magnetic bodies RM include a pair of a first stationary magnetic body R14 and a second stationary magnetic body R24 disposed on both sides of the tilt-side magnetic body KM. Although not illustrated in detail, the stationary magnetic bodies RM (the first stationary magnetic body R14 and the second stationary magnetic body R24) are fixed to the casing K1. In Fig. 8A, the tilt-side magnetic body KM and the stationary magnetic bodies RM are illustrated so as to be spaced apart from one another by a certain distance. In these spaces, cushioning members, not illustrated, are disposed while being attached to the tilt-side magnetic body KM or the stationary magnetic bodies RM so as to prevent a contact noise from occurring when the tilt-side magnetic body KM and the stationary magnetic bodies RM directly come into contact with one another.

The stationary magnetic bodies RM (the first stationary magnetic body R14 and the second stationary magnetic body R24) have a rectangular plate shape as a whole. The stationary magnetic bodies RM are curved so that, when disposed on both sides of the tilt-side magnetic body KM, both end surfaces of one of the stationary magnetic bodies RM face both end surfaces of the other stationary magnetic body RM. Although not illustrated, the stationary magnetic bodies RM (the first stationary magnetic body R14 and the second stationary magnetic body R24) are fixed to the casing K1.

Here, the movement of the operation member 1 in the lateral direction D1 between the first position P1 and the second position P2 is described referring to Fig. 8A.

In the first position P1 illustrated in Fig. 8A, serving as a reference position, the first stationary magnetic body R14 and the tilt-side magnetic body KM oppose each other while being adjacent to each other. Thus, the first stationary magnetic body R14 and the tilt-side magnetic body KM are in the state of strongly attracting each other. Thus, the operation member 1 remains in the first position P1, so that the operation member 1 keeps tilting.

Then, when the operation member 1 in the first position P1, serving as the reference position, is tilted in the X1 direction by an operator and moved to the second position P2, serving as the reference position, the tilt-side magnetic body KM rotates in the X1 direction around the second tilt shaft 22j (see Fig. 6A). Thus, the tilt-side magnetic body KM moves away from the first stationary magnetic body R14 and approaches the second stationary magnetic body R24. When the operation member 1 is disposed in the second position P2, the tilt-side magnetic body KM and the second stationary magnetic body R24 oppose each other while being adjacent to each other. The tilt-side magnetic body KM and the second stationary magnetic body R24 are thus in the state of strongly attracting each other. Thus, the operation member 1 remains in the second position P2, so that the operation member 1 keeps tilting.

When the operation member 1 in the first position P1, in which the first stationary magnetic body R14 and the tilt-side magnetic body KM are strongly attracting each other, is moved to the second position P2, the first stationary magnetic body R14 and the tilt-side magnetic body KM are pulled apart and the relationship between the first stationary magnetic body R14 and the tilt-side magnetic body KM changes to a weakly attracted state. Thus, an operator can receive tactile feedback. Although not described in detail, when an operator operates the operation member 1 so as to tilt the operation member 1 in the X2 direction from the second position P2 to the first position P1, a similar operation is performed and the same effects occur, so that the operator can receive tactile feedback.

Now, the opposing magnetic bodies TM and the movable magnetic bodies MM of the operation device 101 are described. The opposing magnetic bodies TM of the operation device 101 are composed of rectangular plate-shaped permanent magnets. As illustrated in Fig. 7, the opposing magnetic bodies TM include a first opposing magnetic body T14, disposed on one side of the base portion 1d of the operation member 1, on which the first movable member H13 (or the third movable member H33) is disposed, and a second opposing magnetic body T24, disposed on the other side of the base portion 1d on which the second movable member H23 (or the fourth movable member H43) is disposed.

Although not illustrated in detail, according to the first embodiment of the invention, the opposing magnetic bodies TM (the first opposing magnetic body T14 and the second opposing magnetic body T24) are accommodated in the first frame portion 32A illustrated in Figs. 10A and 10B and fixed to the frame 32. Specifically, the opposing magnetic bodies TM are held in a holding member (the first frame portion 32A) that do not move in association with the tilt operation of the operation member 1, whereby the opposing magnetic bodies TM are fixed at certain positions regardless of whether an operator performs a tilt operation.

As illustrated in Fig. 7 and Fig. 8B, the movable magnetic bodies MM of the operation device 101 are composed of a soft magnetic material such as iron. The movable magnetic bodies MM include a first movable magnetic body M14 held by the first movable member H13, a second movable magnetic body M24 held by the second movable member H23, a third movable magnetic body M34 held by the third movable member H33, and a fourth movable magnetic body M44 held by the fourth movable member H43. The first and third movable magnetic bodies M14 and M34 are paired to hold the first opposing magnetic body T14 therebetween. The second and fourth movable magnetic bodies M24 and M44 are paired to hold the second opposing magnetic body T24 therebetween. Each pair of movable magnetic bodies MM are disposed adjacent to each other and attract each other. In Fig. 8B, the movable magnetic bodies MM and the opposing magnetic bodies TM are illustrated so as to be spaced apart from one another at a certain distance. In these spaces, cushioning members, not illustrated, are disposed while being attached to the movable magnetic bodies MM or the opposing magnetic bodies TM so as to prevent a contact noise from occurring when the movable magnetic bodies MM and the opposing magnetic bodies TM directly come into contact with one another.

The movable magnetic bodies MM (the first movable magnetic body M14, the second movable magnetic body M24, the third movable magnetic body M34, and the fourth movable magnetic body M44) have a rectangular plate shape as a whole. The movable magnetic bodies MM are curved so that, when disposed on both sides of the corresponding opposing magnetic body TM, both end surfaces of one of the movable magnetic bodies MM face both end surfaces of the paired movable magnetic body MM. Thus, a magnetic flux caused by the opposing magnetic body TM (permanent magnet) is confined to a further extent to a range between the paired movable magnetic bodies MM, whereby the force of attraction between the paired movable magnetic bodies MM can be enhanced.

The movable magnetic bodies MM are held by the movable members HK, which are non-magnetic. Thus, in contrast to the case where the movable magnetic bodies MM are held by soft magnetic movable members, a magnetic flux is confined between each pair of movable magnetic bodies MM, whereby the force of attraction between the paired movable magnetic bodies MM can be further enhanced. Therefore, the opposing magnetic bodies TM can be made smaller for obtaining an equivalent force of attraction. This enables a size reduction of expensive permanent magnets (opposing magnetic bodies TM) and a reduction of production costs of the operation device 101.

Now, the stopper portions 6 of the operation device 101 are described. Each stopper portion 6 of the operation device 101 has a function of stopping the tilting operation of one of the paired movable magnetic bodies MM when the operation member 1 in the reference position (the first position P1 or the second position P2) is tilted in the front-rear direction D2 so as to be shifted to a subsequent one of the positions. In other words, according to the first embodiment of the invention, the stopper portion 6 is disposed on each opposing magnetic body TM held in the first frame portion 32A (holding member) of the support body 2.

Referring now to the schematic diagrams of Figs. 8B, 12A, 12B, 12C, 13A, 13B, and 13C, the details of the stopper portion 6 are described by describing the movement of the operation device 101 in the front-rear direction D2, different from the lateral direction D1. The movement of the operation device 101 in the front-rear direction D2 is performed by an operator performing a tilt operation while the first position P1 or the second position P2 is used as the reference position (see Fig. 4B). Here, the movement when the second position P2 is used as the reference position is described in detail. Figs. 12A, 12B, and 12C are schematic diagrams for illustrating an operation of the operation device 101 according to the first embodiment of the invention, where Fig. 12A illustrates the operation device 101 in the reference position, Fig. 12B illustrates the operation device 101 in another position after being tilted in a first direction (Y1 direction in Fig. 12B), and Fig. 12C illustrates the operation device in another position after being tilted further in the first direction. Figs. 13A, 13B, and 13C are schematic diagrams illustrating an operation of the operation device 101 according to the first embodiment of the invention, where Fig. 13A illustrates the operation device 101 in the reference position, the same position as in the case of Fig. 12A, Fig. 13B illustrates the operation device 101 in another position after being tilted in a second direction (Y2 direction in Fig. 13B), and Fig. 13C illustrates the operation device 101 in another position after being tilted further in the second direction than the operation device 101 illustrated in Fig. 13B.

Firstly, the tilt operation of the operation member 1 in a first direction (Y1 direction in Figs. 12A, 12B, and 12C) of the front-rear direction D2 is described. When the operation member 1 is in the second position P2 serving as the reference position, the base portion 1d of the operation member 1 is kept parallel to the Y direction, as illustrated in Fig. 8B. Thus, the four movable members HK (the first movable member H13, the second movable member H23, the third movable member H33, and the fourth movable member H43) opposing the base portion 1d are also kept parallel to the Y direction. The first and third movable magnetic bodies M14 and M34 held by the corresponding movable members HK oppose each other with the first opposing magnetic body T14 interposed therebetween while being adjacent to one another. The second and fourth movable magnetic bodies M24 and M44 held by the corresponding movable members HK oppose each other with the second opposing magnetic body T24 interposed therebetween while being adjacent to one another. Thus, when the operation member 1 is in the reference position (second position P2), the operation member 1 is kept stable without rattling since all the movable magnetic bodies MM are attracted and attached to one another with the respective opposing magnetic bodies TM interposed therebetween.

Secondly, when the operation member 1 in the reference position (second position P2) illustrated in Fig. 12A is tilted by an operator in the first direction (Y1 direction illustrated in Fig. 8B), the operation member 1 is rotated around the tilt shaft (first tilt shaft) 12e illustrated in Figs. 8A and 8B serving as the center of rotation. The first pushing portion 11p (see Fig. 9B) of the base portion 1d, on the side opposite to the side of the tilt operation (on the Y2 side illustrated in Fig. 12B) pushes the opposing first movable member H13, so that the first movable member H13 rotates upward. Then, the first movable magnetic body M14 held by the first movable member H13 is also rotated and tilted in the first direction.

Here, the third movable magnetic body M34 paired with the first movable magnetic body M14 is attracted to the first opposing magnetic body T14 with a cushioning material interposed therebetween. Thus, the third movable magnetic body M34 is prevented from tilting in the first direction by the first opposing magnetic body T14 held by the first frame portion 32A (holding member) and fixed to a predetermined position. Then, the first and third movable magnetic bodies M14 and M34 become separated from each other, as illustrated in Fig. 12B, so that the relationship between the first and third movable magnetic bodies M14 and M34 changes from a strongly attracted state to a weakly attracted state. At this time, the operation member 1 in the second position P2 is shifted to the front first position S21 (see Fig. 4B) and an operator can receive tactile feedback (click feel) at the shifting from the second position P2 to the front first position S21. According to the first embodiment of the invention, what prevents the third movable magnetic body M34 from tilting is the first opposing magnetic body T14, or more specifically, the surface of the first opposing magnetic body T14 facing the third movable magnetic body M34 and this surface functions as a stopper portion 6 (or expressed as a stopper portion 6a for facilitating the description). The movement in the front-rear direction D2 while the first position P1 is used as the reference position is similar to the above-described movement in the front-rear direction D2 while the second position P2 is used as the reference position.

When the tilt operation in the first direction (Y1 direction) is continued further by the operator from the position (front first position S21) illustrated in Fig. 12B, the operation member 1 rotates further. Thus, the second pushing portion 21p (see Fig. 9B) of the base portion 1d located on the side of the tilt operation (Y1 side in Fig. 12B) pushes the opposing second movable member H23, so that the second movable member H23 rotates downward. Accordingly, the second movable magnetic body M24 held by the second movable member H23 is also rotated and tilted in the first direction.

Here, the fourth movable magnetic body M44 paired with the second movable magnetic body M24 is attracted to the second opposing magnetic body T24 with a cushioning material interposed therebetween. Thus, the fourth movable magnetic body M44 is prevented from tilting in the first direction by the second opposing magnetic body T24 held by the first frame portion 32A (holding member) and fixed to a predetermined position. Then, the second and fourth movable magnetic bodies M24 and M44 become separated from each other, as illustrated in Fig. 12C, so that the relationship between the second and fourth movable magnetic bodies M24 and M44 changes from a strongly attracted state to a weakly attracted state. At this time, the operation member 1 is shifted from the front first position S21 to the front second position S22 (see Fig. 4B) and an operator can receive tactile feedback (click feel) at the shifting from the front first position S21 to the front second position S22. According to the first embodiment of the invention, what prevents the fourth movable magnetic body M44 from tilting is the second opposing magnetic body T24, or more specifically, the surface of the second opposing magnetic body T24 facing the fourth movable magnetic body M44 and this surface functions as a stopper portion 6 (or expressed as a stopper portion 6b for easy description).

In the operation device 101 according to the first embodiment of the invention having the above-described configuration, the operation member 1, shiftable to multiple positions as a result of being tilted from the reference position (first position P1 or second position P2), includes multiple stopper portions 6 corresponding to the multiple positions, as illustrated in Figs. 12B and 12C. Specifically, the stopper portion 6a is provided so as to correspond to the front first position S21 (or the frontward position S11) illustrated in Fig. 4B and the stopper portion 6b is provided so as to correspond to the front second position S22 illustrated in Fig. 4B.

Thus, at the time of switching from, for example, the reference position (second position P2) to a adjoining position (front first position S21) and then from the adjoining position (front first position S21) to the position following the adjoining position (front second position S22), the tilt operation of one of the movable magnetic bodies MM in the first direction is continued whereas the other one of the movable magnetic bodies MM is prevented from being tilted by the corresponding stopper portion 6 (6a or 6b). Thus, in each position, the paired movable magnetic bodies MM are pulled apart from each other and become separated from each other. The change from the strongly attracted state to the weakly attracted state that occurs at this time can provide an operator with tactile feedback. In contrast to an existing example, the operation device 101 does not include a sliding mechanism that causes tactile feedback. Thus, the operation device 101 can be made more highly durable.

In addition, each pair of movable magnetic bodies MM are disposed with a permanent magnet (opposing magnetic body TM) interposed therebetween to be allowed to be separated from each other. This configuration can thus provide an operator with non-contact tactile feedback using a minimum (one) permanent magnet. Thus, the quantity of expensive permanent magnets is kept to a minimum, so that the operation device 101 can be manufactured at low costs.

In the operation device 101 according to the first embodiment of the invention, when the operation member 1 is tilted in the first direction (Y1 direction illustrated in Figs. 12A, 12B, and 12C), the first pushing portion 11p of the base portion 1d pushes the first movable member H13, the first movable magnetic body M14 held by the first movable member H13 is tilted, and the stopper portion 6 (6a) prevents the third movable magnetic body M34 held by the third movable member H33 from tilting. When the operation member 1 keeps being tilted further in the first direction (tilt operation direction), the second pushing portion 21p pushes the second movable member H23, the second movable magnetic body M24 held by the second movable member H23 is tilted, and the stopper portion 6 (6b) prevents the fourth movable magnetic body M44 held by the fourth movable member H43 from tilting. Thus, the first movable magnetic body M14, which is tilting, and the third movable magnetic body M34, stopped by the stopper portion 6a, become easily separated from each other. Likewise, when the operation member 1 keeps being tilted further in the first direction, the second movable magnetic body M24, which is tilting, and the fourth movable magnetic body M44, stopped by the stopper portion 6b, become easily separated from each other, the second and fourth movable magnetic bodies M24 and M44 being located on the side of the tilt shaft 12e opposite to the side on which the first and third movable magnetic bodies M14 and M34 are located. Thus, in each position (front first position S21 and the front second position S22), the paired first and third movable magnetic bodies M14 and M34 can become easily separated from each other and the paired second and fourth movable magnetic bodies M24 and M44 can become easily separated from each other. Thus, the operation device 101 with tactile feedback can be easily manufactured.

The operation device 101 according to the first embodiment of the invention operates similarly also in the tilt operation of the operation member 1 in the second direction (Y2 direction illustrated in Fig. 8B). Here, the tilt operation of the operation member 1 in the second direction (Y2 direction illustrated in Fig. 13) of the front-rear direction D2 is also described.

When the operation member 1 in the reference position (second position P2) illustrated in Fig. 13A is tilted by an operator in the second direction (Y2 direction illustrated in Fig. 8B), the operation member 1 is rotated around the tilt shaft (first tilt shaft) 12e illustrated in Figs. 8A and 8B serving as the center of rotation. The third pushing portion 31p (see Fig. 9B) of the base portion 1d on the side of the tilt operation (on the Y2 side illustrated in Fig. 13B) pushes the opposing third movable member H33, so that the third movable member H33 rotates downward. Then, the third movable magnetic body M34 held by the third movable member H33 is also rotated and tilted in the second direction.

Here, the first movable magnetic body M14 paired with the third movable magnetic body M34 is attracted to the first opposing magnetic body T14 with a cushioning material interposed therebetween. Thus, the first movable magnetic body M14 is prevented from tilting in the second direction by the first opposing magnetic body T14 held by the first frame portion 32A (holding member) and fixed to a predetermined position. Then, the first and third movable magnetic bodies M14 and M34 become separated from each other, as illustrated in Fig. 13B, so that the relationship between the first and third movable magnetic bodies M14 and M34 changes from a strongly attracted state to a weakly attracted state. At this time, the operation member 1 in the second position P2 is shifted to the rear first position S23 (see Fig. 4B) and an operator can receive tactile feedback (click feel) at the shifting from the second position P2 to the rear first position S23. According to the first embodiment of the invention, what prevents the first movable magnetic body M14 from tilting is the first opposing magnetic body T14, or more specifically, the surface of the first opposing magnetic body T14 facing the first movable magnetic body M14 and this surface functions as a stopper portion 6 (or expressed as a stopper portion 6c for easy description). The movement in the front-rear direction D2 while the first position P1 is used as the reference position is similar to the above-described movement in the front-rear direction D2 while the second position P2 is used as the reference position.

When the tilt operation in the second direction (Y2 direction) is continued further by the operator from the position (rear first position S23) illustrated in Fig. 13B, the operation member 1 rotates further. Thus, the fourth pushing portion 41p (see Fig. 9B) of the base portion 1d located on the side opposite to the side of the tilt operation (Y1 side in Fig. 13B) pushes the opposing fourth movable member H43, so that the fourth movable member H43 rotates upward. Accordingly, the fourth movable magnetic body M44 held by the fourth movable member H43 is also rotated and tilted in the second direction.

Here, the second movable magnetic body M24 paired with the fourth movable magnetic body M44 is attracted to the second opposing magnetic body T24 with a cushioning material interposed therebetween. Thus, the second movable magnetic body M24 is prevented from tilting in the second direction by the second opposing magnetic body T24 held by the first frame portion 32A (holding member) and fixed to a predetermined position. Then, the second and fourth movable magnetic bodies M24 and M44 become separated from each other, as illustrated in Fig. 13C, so that the relationship between the second and fourth movable magnetic bodies M24 and M44 changes from a strongly attracted state to a weakly attracted state. At this time, the operation member 1 is shifted from the rear first position S23 to the rear second position S24 (see Fig. 4B) and an operator can receive tactile feedback (click feel) at the shifting from the rear first position S23 to the rear second position S24. According to the first embodiment of the invention, what prevents the second movable magnetic body M24 from tilting is the second opposing magnetic body T24, or more specifically, the surface of the second opposing magnetic body T24 facing the second movable magnetic body M24 and this surface functions as a stopper portion 6 (or expressed as a stopper portion 6d for easy description).

In the operation device 101 according to the first embodiment of the invention having the above-described configuration, when the operation member 1 is tilted in the second direction (Y2 direction illustrated in Figs. 13A, 13B, and 13C), the third pushing portion 31p of the base portion 1d pushes the third movable member H33, the third movable magnetic body M34 held by the third movable member H33 is tilted, and the stopper portion 6 (6c) prevents the first movable magnetic body M14 held by the first movable member H13 from tilting. When the operation member 1 keeps being tilted further in the second direction (tilt operation direction), the fourth pushing portion 41p pushes the fourth movable member H43, the fourth movable magnetic body M44 held by the fourth movable member H43 is tilted, and the stopper portion 6 (6d) prevents the second movable magnetic body M24 held by the second movable member H23 from tilting. Thus, the third movable magnetic body M34, which is tilting, and the first movable magnetic body M14, stopped by the stopper portion 6c, become easily separated from each other. Likewise, when the operation member 1 keeps being tilted further in the second direction, the fourth movable magnetic body M44, which is tilting, and the second movable magnetic body M24, stopped by the stopper portion 6d, become easily separated from each other, the second and fourth movable magnetic bodies M24 and M44 being located on the side of the tilt shaft 12e opposite to the side on which the first and third movable magnetic bodies M14 and M34 are located. Thus, in each position (rear first position S23 and the rear second position S24), the paired first and third movable magnetic bodies M14 and M34 can become easily separated from each other and the paired second and fourth movable magnetic bodies M24 and M44 can become easily separated from each other. Thus, the operation device 101 with tactile feedback can be easily manufactured.

According to the first embodiment of the invention, each pair of movable magnetic bodies MM (a pair of the first and third movable magnetic bodies M14 and M34 or a pair of the second and fourth movable magnetic bodies M24 and M44) are disposed in such positions that the force of attraction remains being exerted between the paired movable magnetic bodies when the operation member 1 is tilted in the Y1 direction or the Y2 direction and the paired movable magnetic bodies MM become separated from each other as illustrated in Fig. 12B, 12C, 13B, or Fig. 13C. Thus, in each position (the front first position S21, the front second position S22, the rear first position S23, and the rear second position S24), when unloaded with a tilting force from the operator, the paired movable magnetic bodies MM that have been pulled apart from each other start attracting each other again due to the force of attraction between each other. This configuration allows the operation member 1 to automatically return to the reference position (second position P2) without using a member for automatic return. Alternatively, the pair of the first and third movable magnetic bodies M14 and M34 may be disposed at such positions that the force of attraction remains being exerted between the first and third movable magnetic bodies M14 and M34 from when the first and third movable magnetic bodies M14 and M34 become separated from each other until the second and fourth movable magnetic bodies M24 and M44 become separated from each other. In addition, the pair of the second and fourth movable magnetic bodies M24 and M44 may be disposed at such positions that the force of attraction remains being exerted between the second and fourth movable magnetic bodies M24 and M44 when the second and fourth movable magnetic bodies M24 and M44 become separated from each other. This configuration allows, when an operator stops exerting the tilting force, the second and fourth movable magnetic bodies M24 and M44 to be attracted to each other and then allows the first and third movable magnetic bodies M14 and M34 to be attracted to each other. This configuration thus allows the operation member 1 to be automatically returned to the reference position without using a member for automatic return.

Now, the casing K1, the cover K2, and the circuit board 19 of the operation device 101 are described. First, the casing K1 of the operation device 101 is composed of a synthetic resin such as polybutylene terephthalate (PBT) and formed into a shape of a rectangular box having one surface open and an opening K1k, as illustrated in Fig. 3. This casing K1 accommodates components such as the support body 2, the multiple movable magnetic bodies MM, the multiple opposing magnetic bodies TM, and the multiple movable member HK.

As illustrated in Fig. 3, the casing K1 also has a circular through hole K1h in its top surface. The operation shaft 1j of the operation member 1 is inserted into this through hole Klh and part of the operation shaft 1j is left uncovered over the top surface of the casing K1. As described above, the casing K1 has, on its side surfaces, the bearing portions 42k of the support body 2. The second tilt shaft 22j of the support body 2 is inserted through the bearing portions 42k and the bearing portions 42k support the frame 32 of the support body 2 so that the frame 32 is rotatable. Although not illustrated, the stationary magnetic bodies RM (the first stationary magnetic body R14 and the second stationary magnetic body R24) are fixed to an inner surface of the casing K1.

As in the case of the casing K1, the cover K2 of the operation device 101 is composed of a synthetic resin such as polybutylene terephthalate (PBT) and formed into a shape of a board, as illustrated in Fig. 3, so as to cover the opening Klk of the casing K1 (see Fig. 1 and Figs. 2A and 2B). Although not illustrated, the cover K2 is fitted to the casing K1.

The circuit board 19 of the operation device 101 is composed of a printed wiring board. As described above, the controlling unit 50C, the first signal processor 51S, and the second signal processor 52S are mounted on the circuit board 19 (see Fig. 3). Although not illustrated, the circuit board 19 is connected to a flexible printed circuit (FPC) for electrically connecting the first position detector and the second position detector to the first signal processor 51S and the second signal processor 52S, respectively. In addition, a connector for connecting the circuit board 19 to external devices is mounted on the circuit board 19.

As described above, the operation device 101 according to the first embodiment of the invention is preferably usable in the vehicular shift device 500 having shift positioning (shift pattern) illustrated in Fig. 4A. Specifically, the vehicular shift device 500 according to the first embodiment of the invention has shift positioning (shift pattern) that enables shifting to each position (the front first position S21 or the frontward position S11, the front second position S22, the second position P2 or the first position P1, the rear first position S23 or the rearward position S13, or the rear second position S24). Thus, the operation device 101 is preferably usable in the vehicular shift device 500. The vehicular shift device 500 can thus perform a gearshift operation that provides tactile feedback. In contrast to an existing example, the vehicular shift device 500 does not include a sliding mechanism at a portion that causes tactile feedback, whereby the vehicular shift device 500 can have high durability.

When the operation member 1 of the operation device 101 is disposed in the reference position, each pair of movable magnetic bodies MM are attracted to each other with the corresponding opposing magnetic body TM interposed therebetween. Thus, when the shift knob 50N fitted to the operation member 1 is disposed in the reference position, the shift knob 50N is kept stable without rattling even while the vehicle is running and is thus highly suitable to the vehicular shift device 500.

Effects of the operation device 101 and the vehicular shift device 500 according to the first embodiment of the invention having the above-described configurations are collectively described below.

The operation device 101 according to the first embodiment of the invention includes stopper portions 6 (6a, 6b, 6c, and 6d) corresponding to multiple positions (the front first position S21 or the frontward position S11, the front second position S22, the rear first position S23 or the rearward position S13, or the rear second position S24) in any of which the operation member 1 is disposed after being tilted from the reference position (the first position P1 or the second position P2). Thus, during shifting from, for example, the reference position (second position P2) to the adjoining position (the front first position S21 or the rear first position S23), and from the adjoining position (the front first position S21 or the rear first position S23) to the position following the adjoining position (the front second position S22 or the rear second position S24), the tilt operation of one of the movable magnetic bodies MM in the first direction is continued whereas the other one of the movable magnetic bodies MM is prevented from being tilted by the corresponding stopper portion 6 (6a, 6c, 6b, or 6d). Thus, the pair of the movable magnetic bodies MM are pulled apart and become separated from each other in each position. This separation changes the relationship between the movable magnetic bodies MM from the strongly attracted state to the weakly attracted state, whereby an operator can receive tactile feedback. In contrast to an existing example, the operation device 101 does not include a sliding mechanism at a portion that causes tactile feedback, whereby the operation device 101 can have high durability.

When the operation member 1 is tilted in the first direction, the first pushing portion 11p of the base portion 1d pushes the first movable member H13, the first movable magnetic body M14 held by the first movable member H13 is tilted, and the stopper portion 6 (6a) prevents the third movable magnetic body M34 held by the third movable member H33 from tilting. When the operation member 1 keeps being tilted further in the first direction (tilt operation direction), the second pushing portion 21p pushes the second movable member H23, the second movable magnetic body M24 held by the second movable member H23 is tilted, and the stopper portion 6 (6b) prevents the fourth movable magnetic body M44 held by the fourth movable member H43 from tilting. Thus, the first movable magnetic body M14, which is tilting, and the third movable magnetic body M34, stopped by the stopper portion 6a, become easily separated from each other. Likewise, when the operation member 1 keeps being tilted further in the first direction, the second movable magnetic body M24, which is tilting, and the fourth movable magnetic body M44, stopped by the stopper portion 6b, become easily separated from each other, the second and fourth movable magnetic bodies M24 and M44 being located on the side of the tilt shaft 12e opposite to the side on which the first and third movable magnetic bodies M14 and M34 are located. Thus, in each position, the paired first and third movable magnetic bodies M14 and M34 can become easily separated from each other and the paired second and fourth movable magnetic bodies M24 and M44 can become easily separated from each other. Thus, the operation device 101 with tactile feedback can be easily manufactured.

When the operation member 1 is tilted in the second direction, the third pushing portion 31p of the base portion 1d pushes the third movable member H33, the third movable magnetic body M34 held by the third movable member H33 is tilted, and the stopper portion 6 (6c) prevents the first movable magnetic body M14 held by the first movable member H13 from tilting. When the operation member 1 keeps being tilted further in the second direction (tilt operation direction), the fourth pushing portion 41p pushes the fourth movable member H43, the fourth movable magnetic body M44 held by the fourth movable member H43 is tilted, and the stopper portion 6 (6d) prevents the second movable magnetic body M24 held by the second movable member H23 from tilting. Thus, the third movable magnetic body M34, which is tilting, and the first movable magnetic body M14, stopped by the stopper portion 6c, become easily separated from each other. Likewise, when the operation member 1 keeps being tilted further in the second direction, the fourth movable magnetic body M44, which is tilting, and the second movable magnetic body M24, stopped by the stopper portion 6b, become easily separated from each other, the second and fourth movable magnetic bodies M24 and M44 being located on the side of the tilt shaft 12e opposite to the side on which the first and third movable magnetic bodies M14 and M34 are located. Thus, in each position, the paired first and third movable magnetic bodies M14 and M34 can become easily separated from each other and the paired second and fourth movable magnetic bodies M24 and M44 can become easily separated from each other. Thus, the operation device 101 with tactile feedback can be easily manufactured.

The urging members FB, which can urge the movable magnetic bodies MM toward the opposing magnetic bodies TM, are disposed on the movable members HK. Thus, when an operator performs a tilt operation toward a side on which the urging members FB are disposed, the urging members FB urge the movable magnetic bodies MM against a force in the direction in which the movable magnetic bodies MM are to tilt (tilt operation direction). Thus, an operator can receive a response such as a heavier operation load or more distinct tactile feedback, and thus high maneuverability.

Each of the urging members FB is integrated with the corresponding movable member HK. This configuration thus dispenses with the use of additional separate urging members FB and facilitates positioning of the urging members FB at intended positions. Thus, an operation device with tactile feedback can be more easily manufactured.

The opposing magnetic bodies TM are held by a holding member (first frame portion 32A) that does not move in association with a tilt operation of the operation member 1. Thus, the opposing magnetic bodies TM can be fixed at predetermined positions regardless of whether an operator performs a tilt operation. Thus, the movable magnetic bodies MM can be securely pulled apart from the corresponding opposing magnetic bodies TM.

The pair of movable magnetic bodies MM are curved so that, when disposed on both sides of the corresponding opposing magnetic body TM, both ends of one of the movable magnetic bodies MM face both ends of the other one of the movable magnetic bodies MM. Thus, a magnetic flux caused by the opposing magnetic body TM (permanent magnet) is confined to a further extent to a range between the paired movable magnetic bodies MM, whereby the force of attraction between the paired movable magnetic bodies MM can be enhanced. Thus, an operator can receive a response such as a heavier operation load or more distinct tactile feedback. Conversely, to provide an equivalent response such as an equivalent operation load or equivalent tactile feedback, each pair of movable magnetic bodies MM or opposing magnetic bodies TM can be made smaller.

Each pair of movable magnetic bodies MM (a pair of the first and third movable magnetic bodies M14 and M34 or a pair of the second and fourth movable magnetic bodies M24 and M44) are disposed in such positions that the force of attraction remains being exerted between the paired movable magnetic bodies MM when the paired movable magnetic bodies MM become separated from each other. Thus, in each position, when unloaded with a tilting force from the operator, the paired movable magnetic bodies MM that have been pulled apart from each other start attracting each other again due to the force of attraction between each other. This configuration allows the operation member 1 to automatically return to the reference position without using a member for automatic return.

In the vehicular shift device 500 according to the first embodiment of the invention, the operation device 101 capable of shifting to each position (the front first position S21 or the frontward position S11, the front second position S22, the second position P2 or the first position P1, the rear first position S23 or the rearward position S13, or the rear second position S24) is preferably usable for shift positioning (shift pattern) of the vehicular shift device 500. The vehicular shift device 500 can thus perform a gearshift operation that provides tactile feedback. In contrast to an existing example, the vehicular shift device 500 does not include a sliding mechanism at a portion that causes tactile feedback, whereby the vehicular shift device 500 can have high durability.

### Second Embodiment

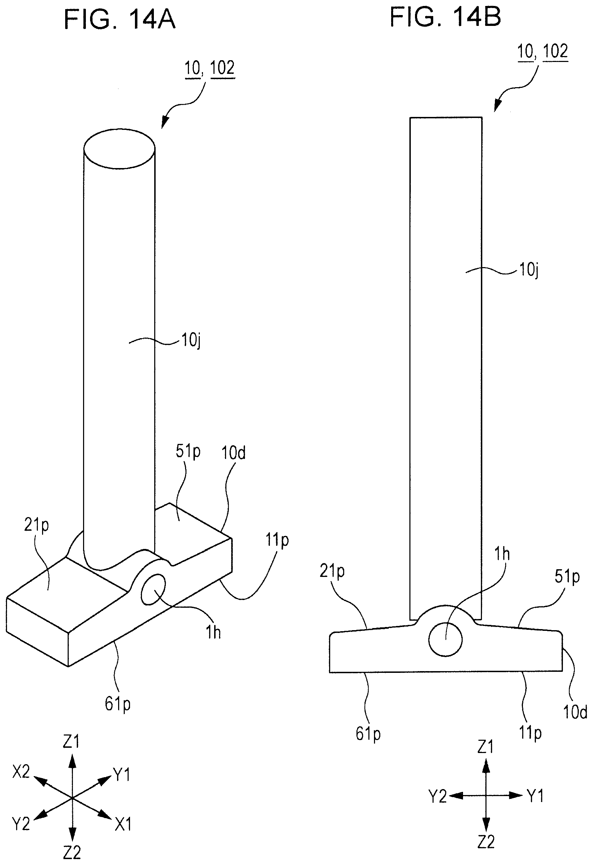

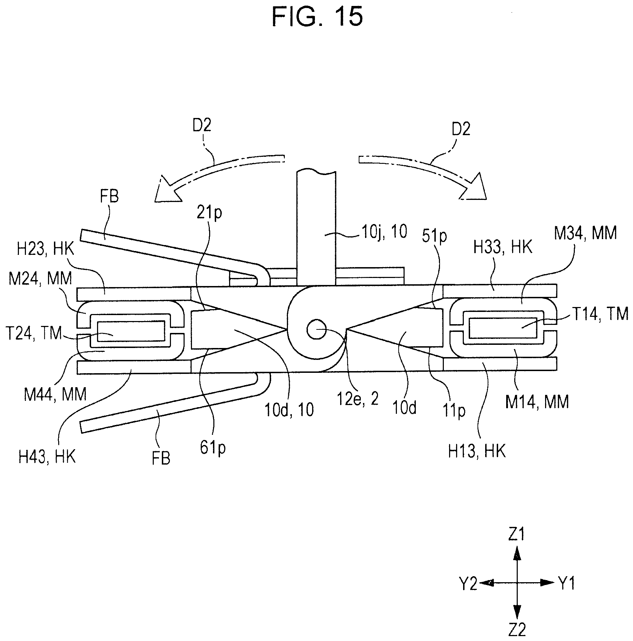

Now, an operation device 102 according to a second embodiment of the invention is described. The operation device 102 according to the second embodiment has the same components as those in the operation device 101 according to the first embodiment except the shape of an operation member 10. Thus, only the operation member 10 and a tilt operation of the operation member 10 in the front-rear direction D2 are described. Components that are the same as those according to the first embodiment are denoted by the same reference symbols and not described in detail. Figs. 14A and 14B illustrate the operation device 102 according to the second embodiment of the invention, where Fig. 14A is a perspective view of an operation member 10 and Fig. 14B is a side view of the operation member 10 viewed from the X1 side in Fig. 14A. Fig. 15 illustrates the operation device 102 according to the second embodiment of the invention and is a side view of the operation device 102 compared with the operation device 101 according to the first embodiment illustrated in Fig. 8B. In the second embodiment of the invention, the operation member 10 has a shape different from that of the operation member 10 according to the first embodiment. Thus, a different movable member HK is pushed in response to a tilt operation of the operation member 10. The movable members HK and the movable magnetic bodies MM disposed in the same positions as those illustrated in Fig. 8B are thus defined as different movable members HK and different movable magnetic bodies MM that correspond to pushing of the operation member 10. For the same reason, the urging members FB disposed in the same positions as those illustrated in Fig. 8B are integrated with the second movable member H23 and the fourth movable member H43 in the operation device 102 (in the operation device 101, the urging members FB are integrated with the first movable member H13 and the third movable member H33).

The operation member 10 of the operation device 102 according to the second embodiment of the invention is composed of a synthetic resin such as liquid crystal polymer (LCP) and formed into such a shape as to include an operation shaft 10j and a base portion 10d, as illustrated in Fig. 14. The operation shaft 10j has a pillar shape extending vertically (Z direction illustrated in Figs. 14A and 14B). The base portion 10d is disposed at an end portion of the operation shaft 10j and extends in a plane through which the axis of the operation shaft 10j passes. The operation shaft 10j of the operation member 10 is covered with the shift knob 50N of the vehicular shift device 500.

As illustrated in Figs. 14A and 14B, the base portion 10d of the operation member 10 extends leftward and rightward (in the Y1 direction and Y2 direction illustrated in Figs. 14A and 14B) from the operation shaft 1j. The base portion 1d has, at a middle portion, a through hole 1h extending in a direction (X direction illustrated in Figs. 14A and 14B) perpendicular to the direction (Y direction illustrated in Figs. 14A and 14B) in which the base portion 10d extends. A tilt shaft (first tilt shaft) 12e of the support body 2, which renders the operation member 10 tiltable, is inserted and fitted into the through hole 1h. In association with the tilt operation of the operation member 10 in the front-rear direction D2 (Y direction illustrated in Fig. 7), the base portion 10d is also tilted.

As illustrated in Fig. 15, in the assembled form of the operation device 102, the base portion 10d is disposed between the multiple movable members HK so that, when the base portion 10d rotates around the axis of the tilt shaft 12e, the base portion 10d comes into contact with the movable members HK. As illustrated in Fig. 14B, the base portion 10d includes a first pushing portion 11p, facing one movable member HK (a first movable member H13) while being arranged parallel to the movable member HK, and a second pushing portion 21p, facing another movable member HK (a second movable member H23) while being inclined toward the movable member HK. The first pushing portion 11p and the second pushing portion 21p are disposed on both sides of the operation shaft 10j with the tilt shaft 12e interposed therebetween. According to the second embodiment of the invention, the base portion 10d also includes a fifth pushing portion 51p, facing one movable member HK (a third movable member H33) while being arranged inclined toward the movable member HK, and a sixth pushing portion 61p, facing another movable member HK (a fourth movable member H43) while being arranged parallel to the movable member HK. The fifth pushing portion 51p and the sixth pushing portion 61p are disposed on both sides of the operation shaft 10j with the tilt shaft 12e interposed therebetween.

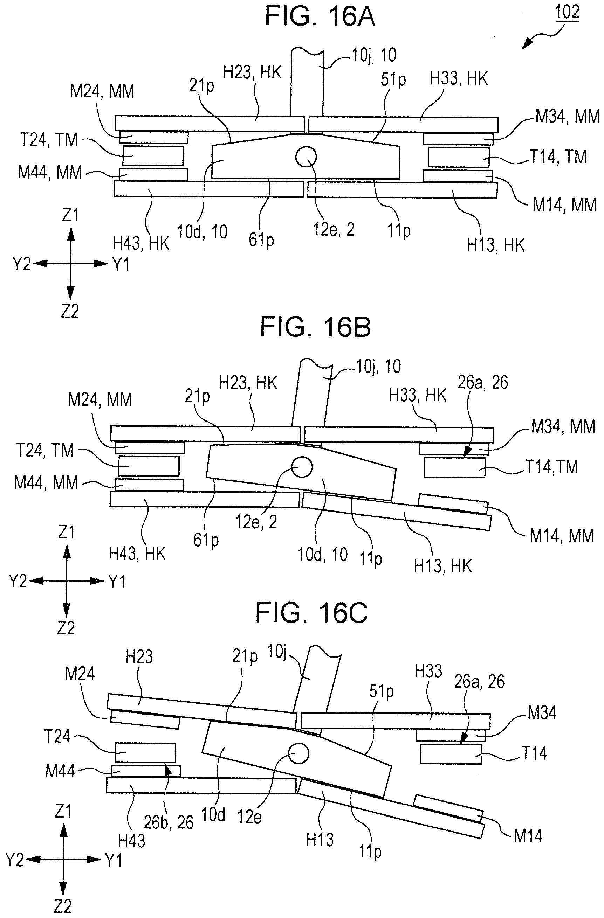

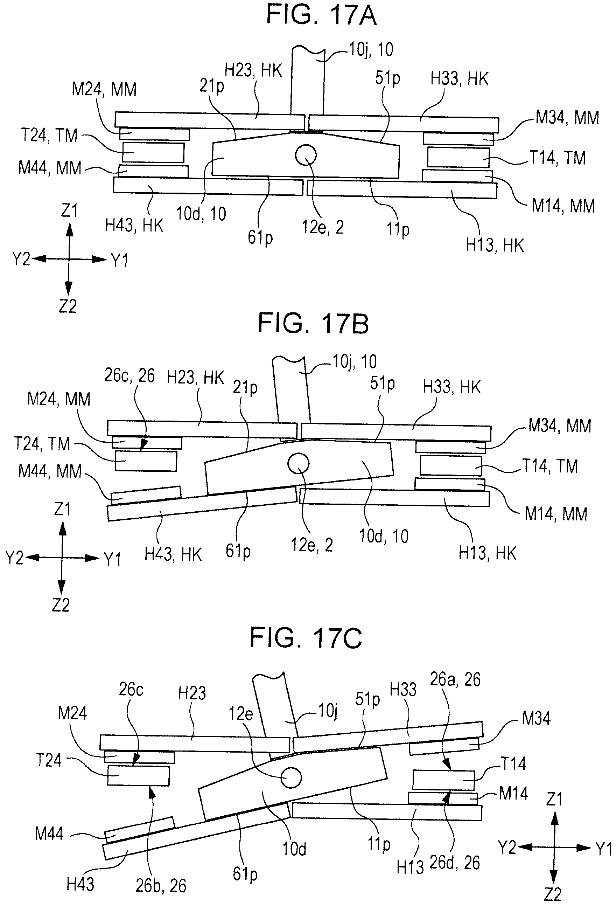

Now, a movement of the operation device 102 in the front-rear direction D2 is described referring to the schematic diagrams of Figs. 16A, 16B, and 16C and Figs. 17A, 17B, and 17C. The operation device 102 is moved in the front-rear direction D2 by an operator performing the tilt operation while the first position P1 or the second position P2 is used as the reference position (see Fig. 4B). Here, the operation in the case where the second position P2 is used as the reference position is described in detail. Figs. 16A, 16B, and 16C are schematic diagrams illustrating the operation of the operation device 102 according to the second embodiment of the invention, where Fig. 16A illustrates the operation device 102 in the reference position, Fig. 16B illustrates the operation device 102 in another position after being tilted in a first direction, and Fig. 16C illustrates the operation device 102 in another position after being tilted further in the first direction than the operation device 102 illustrated in Fig. 16B. Figs. 17A, 17B, and 17C are schematic diagrams illustrating the operation of the operation device 102 according to the second embodiment of the invention, where Fig. 17A illustrates the operation device 102 in the reference position, Fig. 17B illustrates the operation device 102 in another position after being tilted in a second direction, and Fig. 17C illustrates the operation device 102 in another position after being tilted further in the second direction than the operation device 102 illustrated in Fig. 17B.

Firstly, the tilt operation of the operation member 10 in a first direction (Y1 direction in Figs. 16A, 16B, and 16C) of the front-rear direction D2 is described. When the operation member 10 is in the second position P2 serving as the reference position, the base portion 10d of the operation member 10 is kept parallel to the Y direction, as illustrated in Fig. 15. Thus, the four movable members HK (the first movable member H13, the second movable member H23, the third movable member H33, and the fourth movable member H43) opposing the base portion 10d are also kept parallel to the Y direction. The first and third movable magnetic bodies M14 and M34 held by the corresponding movable members HK oppose each other with the first opposing magnetic body T14 interposed therebetween while being adjacent to one another. The second and fourth movable magnetic bodies M24 and M44 held by the corresponding movable members HK oppose each other with the second movable magnetic body M24 interposed therebetween while being adjacent to one another. Thus, when the operation member 10 is in the reference position (second position P2), the operation member 10 is kept stable without rattling since all the movable magnetic bodies MM are attracted and attached to one another with the respective opposing magnetic bodies TM interposed therebetween.

When the operation member 10 in the reference position (second position P2) illustrated in Fig. 16A is tilted by an operator in the first direction (Y1 direction illustrated in Fig. 15), the operation member 10 is rotated around the tilt shaft (first tilt shaft) 12e illustrated in Fig. 15 serving as the center of rotation. The first pushing portion 11p (see Fig. 14B) of the base portion 10d, on the side of the tilt operation (on the Y1 side illustrated in Fig. 16B) pushes the opposing first movable member H13, so that the first movable member H13 rotates downward. Then, the first movable magnetic body M14 held by the first movable member H13 is also rotated and tilted in the first direction.

Here, the third movable magnetic body M34 paired with the first movable magnetic body M14 is attracted to the first opposing magnetic body T14 with a cushioning material interposed therebetween. Thus, the third movable magnetic body M34 is prevented from tilting in the first direction by the first opposing magnetic body T14 held by the first frame portion 32A (holding member) and fixed to a predetermined position. Then, the first and third movable magnetic bodies M14 and M34 become separated from each other, as illustrated in Fig. 16B, so that the relationship between the first and third movable magnetic bodies M14 and M34 changes from a strongly attracted state to a weakly attracted state. At this time, the operation member 10 in the second position P2 is shifted to the front first position S21 (see Fig. 4B) and an operator can receive tactile feedback (click feel) at the shifting from the second position P2 to the front first position S21. According to the second embodiment of the invention, what prevents the third movable magnetic body M34 from tilting is the first opposing magnetic body T14, or more specifically, the surface of the first opposing magnetic body T14 facing the third movable magnetic body M34 and this surface functions as a stopper portion 26 (or expressed as a stopper portion 26a for easy description). The movement in the front-rear direction D2 while the first position P1 is used as the reference position is similar to the above-described movement in the front-rear direction D2 while the second position P2 is used as the reference position.

When the tilt operation in the first direction (Y1 direction) is continued further by the operator from the position (front first position S21) illustrated in Fig. 16B, the operation member 10 rotates further. Thus, the second pushing portion 21p (see Fig. 14B) of the base portion 10d located on the side opposite to the side of the tilt operation (Y2 side in Fig. 16B) pushes the opposing second movable member H23, so that the second movable member H23 rotates upward. Accordingly, the second movable magnetic body M24 held by the second movable member H23 is also rotated and tilted in the first direction.

Here, the fourth movable magnetic body M44 paired with the second movable magnetic body M24 is attracted to the second opposing magnetic body T24 with a cushioning material interposed therebetween. Thus, the fourth movable magnetic body M44 is prevented from tilting in the first direction by the second opposing magnetic body T24 held by the first frame portion 32A (holding member) and fixed to a predetermined position. Then, the second and fourth movable magnetic bodies M24 and M44 become separated from each other, as illustrated in Fig. 16C, so that the relationship between the second and fourth movable magnetic bodies M24 and M44 changes from a strongly attracted state to a weakly attracted state. At this time, the operation member 10 is shifted from the front first position S21 to the front second position S22 (see Fig. 4B) and an operator can receive tactile feedback (click feel) at the shifting from the front first position S21 to the front second position S22. According to the second embodiment of the invention, what prevents the fourth movable magnetic body M44 from tilting is the second opposing magnetic body T24, or more specifically, the surface of the second opposing magnetic body T24 facing the fourth movable magnetic body M44 and this surface functions as a stopper portion 26 (or expressed as a stopper portion 26b for easy description).

As illustrated in Figs. 16B and 16C, the operation device 102 according to the second embodiment of the invention having the above-described configuration includes stopper portions 26 corresponding to multiple positions in any of which the operation member 10 is disposed after being tilted from the reference position (the first position P1 or the second position P2). Specifically, the stopper portion 26a is disposed so as to correspond to the front first position S21 (frontward position S11) illustrated in Fig. 4B and the stopper portion 26b is disposed so as to correspond to the front second position S22 illustrated in Fig. 4B.

Thus, during shifting from, for example, the reference position (second position P2) to the adjoining position (the front first position S21), and from the adjoining position (the front first position S21) to the position following the adjoining position (the front second position S22), the tilt operation of one of the movable magnetic bodies MM in the first direction is continued whereas the other one of the movable magnetic bodies MM is prevented from being tilted by the corresponding stopper portion 26 (26a or 26b). Thus, the pair of movable magnetic bodies MM are pulled apart and become separated from each other in each position. This separation changes the relationship between the movable magnetic bodies MM from the strongly attracted state to the weakly attracted state, whereby an operator can receive tactile feedback. In contrast to an existing example, the operation device 102 does not include a sliding mechanism at a portion that causes tactile feedback, whereby the operation device 102 can have high durability.

In addition, each pair of movable magnetic bodies MM are disposed with a permanent magnet (opposing magnetic body TM) interposed therebetween to be allowed to be separated from each other. This configuration can thus provide an operator with non-contact tactile feedback using a minimum (one) permanent magnet. Thus, the quantity of expensive permanent magnets is kept to a minimum, so that the operation device 102 can be manufactured at low costs.

In the operation device 102 according to the second embodiment of the invention, when the operation member 10 is tilted in the first direction (Y1 direction illustrated in Figs. 16A, 16B, and 16C), the first pushing portion 11p of the base portion 10d pushes the first movable member H13, the first movable magnetic body M14 held by the first movable member H13 is tilted, and the stopper portion 26 (26a) prevents the third movable magnetic body M34 held by the third movable member H33 from tilting. When the operation member 1 keeps being tilted further in the first direction (tilt operation direction), the second pushing portion 21p pushes the second movable member H23, the second movable magnetic body M24 held by the second movable member H23 is tilted, and the stopper portion 26 (26b) prevents the fourth movable magnetic body M44 held by the fourth movable member H43 from tilting. Thus, the first movable magnetic body M14, which is tilting, and the third movable magnetic body M34, stopped by the stopper portion 26a, become easily separated from each other. Likewise, when the operation member 1 keeps being tilted further in the first direction, the second movable magnetic body M24, which is tilting, and the fourth movable magnetic body M44, stopped by the stopper portion 26b, become easily separated from each other, the second and fourth movable magnetic bodies M24 and M44 being located on the side of the tilt shaft 12e opposite to the side on which the first and third movable magnetic bodies M14 and M34 are located. Thus, in each position (front first position S21 and the front second position S22), the paired first and third movable magnetic bodies M14 and M34 can become easily separated from each other and the paired second and fourth movable magnetic bodies M24 and M44 can become easily separated from each other. Thus, the operation device 102 with tactile feedback can be easily manufactured.

The operation device 102 according to the second embodiment of the invention operates similarly also in the tilt operation of the operation member 10 in the second direction (Y2 direction illustrated in Fig. 15). Now, the tilt operation of the operation member 10 in the second direction (Y2 direction illustrated in Figs. 17A, 17B, and 17C) of the front-rear direction D2 is also described.

When the operation member 10 in the reference position (second position P2) illustrated in Fig. 17A is tilted by an operator in the second direction (Y2 direction illustrated in Fig. 15), the operation member 10 is rotated around the tilt shaft (first tilt shaft) 12e illustrated in Fig. 15 serving as the center of rotation. The sixth pushing portion 61p (see Fig. 14B) of the base portion 10d on the side of the tilt operation (on the Y2 side illustrated in Fig. 17B) pushes the opposing fourth movable member H43, so that the fourth movable member H43 rotates downward. Then, the fourth movable magnetic body M44 held by the fourth movable member H43 is also rotated and tilted in the second direction.

Here, the second movable magnetic body M24 paired with the fourth movable magnetic body M44 is attracted to the second opposing magnetic body T24 with a cushioning material interposed therebetween. Thus, the second movable magnetic body M24 is prevented from tilting in the second direction by the second opposing magnetic body T24 held by the first frame portion 32A (holding member) and fixed to a predetermined position. Then, the second and fourth movable magnetic bodies M24 and M44 become separated from each other, as illustrated in Fig. 17B, so that the relationship between the second and fourth movable magnetic bodies M24 and M44 changes from a strongly attracted state to a weakly attracted state. At this time, the operation member 10 in the second position P2 is shifted to the rear first position S23 (see Fig. 4B) and an operator can receive tactile feedback (click feel) at the shifting from the second position P2 to the rear first position S23. According to the second embodiment of the invention, what prevents the second movable magnetic body M24 from tilting is the second opposing magnetic body T24, or more specifically, the surface of the second opposing magnetic body T24 facing the second movable magnetic body M24 and this surface functions as a stopper portion 26 (or expressed as a stopper portion 26c for easy description). Here, the movement of the operation member 10 in the front-rear direction D2 while the first position P1 is used as the reference position is similar to the movement of the operation member 10 in the front-rear direction D2 while the above-described second position P2 is used as the reference position.

When the tilt operation in the second direction (Y2 direction) is continued further by the operator from the position (rear first position S23) illustrated in Fig. 17B, the operation member 10 rotates further. Thus, the fifth pushing portion 51p (see Fig. 14B) of the base portion 10d located on the side opposite to the side of the tilt operation (Y1 side in Fig. 17B) pushes the opposing third movable member H33, so that the third movable member H33 rotates upward. Accordingly, the third movable magnetic body M34 held by the third movable member H33 is also rotated and tilted in the second direction.

Here, the first movable magnetic body M14 paired with the third movable magnetic body M34 is attracted to the first opposing magnetic body T14 with a cushioning material interposed therebetween. Thus, the first movable magnetic body M14 is prevented from tilting in the second direction by the first opposing magnetic body T14 held by the first frame portion 32A (holding member) and fixed to a predetermined position. Then, the first and third movable magnetic bodies M14 and M34 become separated from each other, as illustrated in Fig. 17C, so that the relationship between the first and third movable magnetic bodies M14 and M34 changes from a strongly attracted state to a weakly attracted state. At this time, the operation member 10 is shifted from the rear first position S23 to the rear second position S24 (see Fig. 4B) and an operator can receive tactile feedback (click feel) at the shifting from the rear first position S23 to the rear second position S24. According to the second embodiment of the invention, what prevents the first movable magnetic body M14 from tilting is the first opposing magnetic body T14, or more specifically, the surface of the first opposing magnetic body T14 facing the first movable magnetic body M14 and this surface functions as a stopper portion 26 (or expressed as a stopper portion 26d for easy description).

In the operation device 102 according to the second embodiment of the invention having the above-described configuration, when the operation member 10 is tilted in the second direction (Y2 direction illustrated in Figs. 17A, 17B, and 17C), the sixth pushing portion 61p of the base portion 10d pushes the fourth movable member H43, the fourth movable magnetic body M44 held by the fourth movable member H43 is tilted, and the stopper portion 26 (26c) prevents the second movable magnetic body M24 held by the second movable member H23 from tilting. When the operation member 1 keeps being tilted further in the second direction (tilt operation direction), the fifth pushing portion 51p pushes the third movable member H33, the third movable magnetic body M34 held by the third movable member H33 is tilted, and the stopper portion 26 (26d) prevents the first movable magnetic body M14 held by the first movable member H13 from tilting. Thus, the fourth movable magnetic body M44, which is tilting, and the second movable magnetic body M24, stopped by the stopper portion 26c, become easily separated from each other. Likewise, when the operation member 1 keeps being tilted further in the second direction, the third movable magnetic body M34, which is tilting, and the first movable magnetic body M14, stopped by the stopper portion 26b, become easily separated from each other, the first and third movable magnetic bodies M14 and M34 being located on the side of the tilt shaft 12e opposite to the side on which the second and fourth movable magnetic bodies M24 and M44 are located. Thus, in each position (rear first position S23 and the rear second position S24), the paired second and fourth movable magnetic bodies M24 and M44 can become easily separated from each other and the paired first and third movable magnetic bodies M14 and M34 can become easily separated from each other. Thus, the operation device 102 with tactile feedback can be easily manufactured.

According to the second embodiment of the invention, each pair of movable magnetic bodies MM (a pair of the first and third movable magnetic bodies M14 and M34 or a pair of the second and fourth movable magnetic bodies M24 and M44) are disposed in such positions that the force of attraction remains being exerted between the paired movable magnetic bodies MM when the operation member 10 is tilted in the Y1 direction or the Y2 direction and the paired movable magnetic bodies MM become separated from each other as illustrated in Fig. 16B, 16C, 17B, or Fig. 17C. Thus, in each position (the front first position S21, the front second position S22, the rear first position S23, and the rear second position S24), when unloaded with a tilting force from the operator, the paired movable magnetic bodies MM that have been pulled apart from each other start attracting each other again due to the force of attraction between each other. This configuration allows the operation member 10 to automatically return to the reference position (second position P2) without using a member for automatic return. Alternatively, the pair of the first and third movable magnetic bodies M14 and M34 may be disposed at such positions that the force of attraction remains being exerted between the first and third movable magnetic bodies M14 and M34 after the first and third movable magnetic bodies M14 and M34 become separated from each other until the second and fourth movable magnetic bodies M24 and M44 become separated from each other and, the pair of the second and fourth movable magnetic bodies M24 and M44 may be disposed at such positions that the force of attraction remains being exerted between the second and fourth movable magnetic bodies M24 and M44 when the second and fourth movable magnetic bodies M24 and M44 become separated from each other. This configuration allows, when unloaded with a tilting force from an operator, the second and fourth movable magnetic bodies M24 and M44 to be attracted to each other and then allows the first and third movable magnetic bodies M14 and M34 to be attracted to each other. This configuration thus allows the operation member 10 to be automatically returned to the reference position without using a member for automatic return.

As described above, the operation device 102 according to the second embodiment of the invention is similarly preferably usable in the vehicular shift device 500 having shift positioning (shift pattern) illustrated in Fig. 4A. Specifically, the vehicular shift device 500 according to the first embodiment of the invention has shift positioning (shift pattern) that enables shifting to each position (the front first position S21 or the frontward position S11, the front second position S22, the second position P2 or the first position P1, the rear first position S23 or the rearward position S13, or the rear second position S24). Thus, the operation device 102 is preferably usable in the vehicular shift device 500. The vehicular shift device 500 can thus perform a gearshift operation that provides tactile feedback. In contrast to an existing example, the vehicular shift device 500 does not include a sliding mechanism at a portion that causes tactile feedback, whereby the vehicular shift device 500 can have high durability.

When the operation member 10 of the operation device 102 is disposed in the reference position, each pair of movable magnetic bodies MM are attracted to each other with the corresponding opposing magnetic body TM interposed therebetween. Thus, when the shift knob 50N fitted to the operation member 10 is disposed in the reference position, the shift knob 50N is kept stable without rattling even while the vehicle is running, whereby the shift knob 50N is highly suitable to the vehicular shift device 500.

The invention is not limited to the above-described embodiments and may be embodied in, for example, the following modifications. These modified embodiments also belong to the technical scope of the invention.

### Modification 1

The first embodiment has a configuration in which the urging members FB are disposed on the first movable member H13 and the third movable member H33. This is not the only possible configuration, however. The urging members FB may be disposed on the second movable member H23 and the fourth movable member H43. The combination of the urging members FB and the movable members HK may be appropriately determined. In order to acquire intended maneuverability, the properties of the urging members FB such as the number, the position, and the angle may be appropriately changed.

### Modification 2

The above-described first embodiment has a configuration in which the urging members FB and the corresponding restraint members are spaced apart from one another by a slight distance so as to be capable of coming into contact with one another. Instead, the urging members FB and the restraint member may be disposed in contact with one another or spaced apart from one another by a larger distance. Thus, the point at which the maneuverability changes can be determined as intended.

### Modification 3

In each of the above-described embodiments, the surfaces of the opposing magnetic bodies TM held by the frame 32 of the support body 2 (first frame portion 32A) are preferably used as the stopper portions 6 or the stopper portions 26. However, these are not the only possible configuration. Another mechanism for preventing the other one of the paired movable magnetic bodies MM from tilting may be separately provided.

### Modification 4 and Modification 5

Each of the above-described embodiments has a configuration in which the opposing magnetic bodies TM are held by the frame 32 of the support body 2. However, this is not the only possible configuration. For example, each opposing magnetic body TM may be fixed to one of the corresponding movable magnetic bodies MM and tilted together with the movable magnetic body MM (Modification 4). In this case, a mechanism for preventing the other one of the movable magnetic bodies MM from tilting is separately required. Alternatively, the configuration in which the opposing magnetic bodies TM are held by the frame 32 of the support body 2 and the configuration in which each opposing magnetic body TM is fixed to one of the corresponding movable magnetic bodies MM may be appropriately combined (Modification 5).

### Modification 6

Each of the above-described embodiments has a configuration in which the opposing magnetic bodies TM (the first opposing magnetic body T14 and the second opposing magnetic body T24) have the same size or shape so as to have the same magnetic field intensity. However, the magnetic field intensity may differ between the opposing magnetic bodies TM on the left and right. This configuration can change the maneuverability in the tilt direction (Y1 direction or Y2 direction) in the front-rear direction D2.

### Modification 7

In each of the above-described embodiments, the movable members HK are composed of a synthetic resin, which is non-magnetic. However, the material of the movable members HK is not limited to the synthetic resin. Any non-magnetic material is suitable for the movable members HK. The material may also be, for example, metal such as aluminum or copper alloy. For example, the material may be a metal such as iron, which is a soft magnetic material.

The invention is not limited to the above-described embodiments and may be appropriately changed without departing from the scope of the invention, as defined by the appended claims.

## Claims

1. An operation device (101, 102) having a plurality of positions, comprising:
an operation member (1, 10) tiltable by being operated by an operator, the operation member (1, 10) being disposed in the plurality of positions as a result of being tilted by the operator from a reference position;
a support body (2) that supports the operation member (1, 10) so as to allow the operation member (1, 10) to tilt;
a plurality of stopper portions (6, 6a, 6b, 6c, 6d, 26, 26a, 26b, 26c, 26d) corresponding to the plurality of positions;
a plurality of movable magnetic bodies (MM, M14, M24, M34, M44) that tilt in association with the operation member (1, 10); and
an opposing magnetic body (TM) disposed between each opposing pair of the plurality of movable magnetic bodies (MM, M14, M24, M34, M44),
wherein the plurality of movable magnetic bodies (MM, M14, M24, M34, M44) are composed of a soft magnetic material and the opposing magnetic body (TM) is composed of a permanent magnet,
wherein the pair of movable magnetic bodies (MM, M14, M24, M34, M44) are located adjacent and attracted to each other when the operation member (1, 10) is disposed in the reference position, and
wherein one of the movable magnetic bodies (MM, M14, M24) of the pair is tilted and the other one of the movable magnetic bodies (MM, M34, M44) of the pair is prevented from tilting by the corresponding stopper portion (6, 6a, 6b, 6c, 6d, 26, 26a, 26b, 26c, 26d) when the operation member (1, 10) is disposed in any of the plurality of positions after being tilted from the reference position;
wherein the support body (2) includes a tilt shaft (12e) that allows the operation member (1, 10) to tilt,
wherein the operation member (1, 10) includes an operation shaft (1j, 10j), having a pillar shape, and a base portion (1d, 10d), extending in a plane through which an axis of the operation shaft (1j, 10j) passes,
wherein the base portion (1d, 10d) rotates around the tilt shaft (12e),
wherein the base portion (1d, 10d) includes a first pushing portion (11p) and a second pushing portion (21p), disposed on both sides of the operation shaft (1j, 10j) with the tilt shaft (12e) interposed therebetween,
wherein the operation device (101, 102) further comprises a plurality of movable members (HK, H13, H23, H33, H44) that hold the plurality of movable magnetic bodies (MM, M14, M24, M34, M44) and tilt in association with the plurality of movable magnetic bodies (MM, M14, M24, M34, M44),
wherein the plurality of movable members (HK, H13, H23, H33, H44) include a first movable member (H13), disposed so as to face the first pushing portion (11 p), and a second movable member (H23), disposed so as to face the second pushing portion (21p),
wherein the plurality of movable magnetic bodies (MM, M14, M24, M34, M44) include a first movable magnetic body (M14), a second movable magnetic body (M24), a third movable magnetic body (M34), paired with the first movable magnetic body (M14), and a fourth movable magnetic body (M44), paired with the second movable magnetic body (M24),
wherein the first movable member (H13) holds the first movable magnetic body (M14) and the second movable member (H23) holds the second movable magnetic body (M24),
wherein the plurality of movable members (HK, H13, H23, H33, H44) include a third movable member (H33), which holds the third movable magnetic body (M34), and a fourth movable member (H43), which holds the fourth movable magnetic body (M44),
wherein, when the operation member (1, 10) is tilted in a first direction, the first pushing portion (11 p) tilting in a direction in which the base portion (1d, 10d) tilts pushes the first movable member (H13) opposing the first pushing portion (11p), the first movable magnetic body (M14) held by the first movable member (H13) is tilted, the corresponding stopper portion (6, 6a, 26, 26a) prevents the third movable magnetic body (M34) from tilting, and the first movable magnetic body (M14) and the third movable magnetic body (M34) become separated from each other, and
wherein, when the operation member (1, 10) keeps being tilted further in the first direction, the second pushing portion (21p) pushes the second movable member (H23) opposing the second pushing portion (21p), the second movable magnetic body (M24) held by the second movable member (H23) is tilted, the corresponding stopper portion (6, 6b, 26, 26b) prevents the fourth movable magnetic body (M44) from tilting, and the second movable magnetic body (M24) and the fourth movable magnetic body (M44) become separated from each other.

2. The operation device (101, 102) according to Claim 1,
wherein the plurality of movable members (HK, H13, H23, H33, H44) are composed of a non-magnetic material.

3. The operation device (101, 102) according to Claim 2,
wherein the base portion (1d, 10d) includes a third pushing portion (31p), opposing the third movable member (H33), and a fourth pushing portion (41p), opposing the fourth movable member (H43),
wherein the third pushing portion (31p) and the fourth pushing portion (41p) are disposed on both sides of the operation shaft (1j, 10j) with the tilt shaft (12e) interposed therebetween,
wherein, when the operation member (1, 10) is tilted in a second direction, the third pushing portion (31p) tilted in the direction in which the base portion (1d, 10d) tilts pushes the third movable member (H33) opposing the third pushing portion (31p), the third movable magnetic body (M34) held by the third movable member (H33) is tilted, the corresponding stopper portion (6, 6c, 26, 26d) prevents the first movable magnetic body (M14) from tilting, and the first movable magnetic body (M14) and the third movable magnetic body (M34) become separated from each other, and
wherein, when the operation member (1, 10) keeps being tilted further in the second direction, the fourth pushing portion (41p) pushes the fourth movable member (H43) opposing the fourth pushing portion (41p), the fourth movable magnetic body (M44) held by the fourth movable member (H43) is tilted, the corresponding stopper portion (6, 6d, 26, 26c) prevents the second movable magnetic body (M24) from tilting, and the second movable magnetic body (M24) and the fourth movable magnetic body (M44) become separated from each other.

4. The operation device (102) according to Claim 2,
wherein the base portion (10d) includes a fifth pushing portion (51p), opposing the third movable member (H33), and a sixth pushing portion (61p), opposing the fourth movable member (H43),
wherein the fifth pushing portion (51p) and the sixth pushing portion (61p) are disposed on both sides of the operation shaft (10j) with the tilt shaft (12e) interposed therebetween,
wherein, when the operation member (10) is tilted in a second direction, the sixth pushing portion (61p) tilting in the direction in which the base portion (10d) tilts pushes the fourth movable member (H43) opposing the sixth pushing portion (61p), the fourth movable magnetic body (M44) held by the fourth movable member (H43) is tilted, the corresponding stopper portion (26, 26c) prevents the second movable magnetic body (M24) from tilting, and the second movable magnetic body (M24) and the fourth movable magnetic body (M44) become separated from each other, and
wherein, when the operation member (1, 10) keeps being tilted further in the second direction, the fifth pushing portion (51p) pushes the third movable member (H33) opposing the fifth pushing portion (51p), the third movable magnetic body (M34) held by the third movable member (H33) is tilted, the corresponding stopper portion (26, 26d) prevents the first movable magnetic body (M14) from tilting, and the first movable magnetic body (M14) and the third movable magnetic body (M34) become separated from each other.

5. The operation device (101, 102) according to any one of Claims 2 to 4, wherein an urging member (FB) capable of urging a corresponding one of the movable magnetic bodies (MM, M14, M24, M34, M44) toward the opposing magnetic body (TM) is disposed on at least one of the movable members (HK, H13, H23, H33, H44).

6. The operation device (101, 102) according to Claim 5, wherein the urging member (FB) is integrated with the at least one of the movable members (HK, H13, H23, H33, H44) on which the urging member (FB) is disposed.

7. The operation device (101, 102) according to any one of Claims 1 to 6, further comprising a holding member (32A) that does not move in association with a tilt operation of the operation member (1, 10),
wherein the holding member (32A) holds the opposing magnetic body (TM).

8. The operation device (101, 102) according to any one of Claims 1 to 7, wherein the pair of movable magnetic bodies (MM, M14, M24, M34, M44) are curved so that end surfaces of one of the movable magnetic bodies (MM, M14, M24, M34, M44) face end surfaces of the other one of the movable magnetic bodies (MM, M14, M24, M34, M44).

9. The operation device (101, 102) according to any one of Claims 1 to 8, wherein the pair of movable magnetic bodies (MM, M14, M24, M34, M44) are disposed at such positions at which a force of attraction remains being exerted between the pair of movable magnetic bodies (MM, M14, M24, M34, M44) when the pair of movable magnetic bodies (MM, M14, M24, M34, M44) become separated from each other as a result of the operation member (1, 10) being tilted.

10. A vehicular shift device, comprising:
the operation device (101, 102) according to any one of Claims 1 to 9,
a controlling unit (50C) that transmits signals to onboard devices upon receipt of signals from the operation device (101, 102);
a shift knob (50N) engaged with the operation member (1, 10) of the operation device (101, 102) and gripped by the operator; and
position detecting means for detecting which of the plurality of positions the operation member (1, 10) is disposed in.

## Patentansprüche

1. Betätigungsvorrichtung (101, 102) mit einer Mehrzahl von Stellungen, aufweisend:
ein Betätigungselement (1, 10), das durch Betätigen durch eine Bedienungsperson geneigt werden kann, wobei das Betätigungselement (1, 10) in der Mehrzahl von Stellungen angeordnet wird, indem es von der Bedienungsperson aus einer Referenzstellung geneigt wird;
einen Stützkörper (2), der das Betätigungselement (1, 10) derart abstützt, dass sich das Betätigungselement (1, 10) neigen kann;
eine Mehrzahl von Anschlagbereichen (6, 6a, 6b, 6c, 6d, 26, 26a, 26b, 26c, 26d) entsprechend der Mehrzahl von Stellungen;
eine Mehrzahl von beweglichen Magnetkörpern (MM, M14, M24, M34, M44), die sich in Verbindung mit dem Betätigungselement (1, 10) neigen; und
einen gegenüberliegenden Magnetkörper (TM), der zwischen jedem gegenüberliegenden Paar der Mehrzahl von beweglichen Magnetkörpern (MM, M14, M24, M34, M44) angeordnet ist;
wobei die Mehrzahl von beweglichen Magnetkörpern (MM, M14, M24, M34, M44) aus einem weichmagnetischen Material besteht und der gegenüberliegende Magnetkörper (TM) aus einem Permanentmagneten besteht,
wobei das Paar der beweglichen Magnetkörper (MM, M14, M24, M34, M44) einander benachbart angeordnet und aneinander angezogen ist, wenn das Betätigungselement (1, 10) in der Referenzstellung angeordnet ist, und
wobei einer der beweglichen Magnetkörper (MM, M14, M24) des Paares geneigt ist und der andere der beweglichen Magnetkörper (MM, M34, M44) des Paares durch den entsprechenden Anschlagbereich (6, 6a, 6b, 6c, 6d, 26, 26a, 26b, 26c, 26d) am Neigen gehindert ist, wenn das Betätigungselement (1, 10) in einer der Mehrzahl von Stellungen angeordnet ist, nachdem es aus der Referenzstellung geneigt wurde;
wobei der Abstützkörper (2) eine Neigungsstange (12e) aufweist, die es dem Betätigungselement (1, 10) ermöglicht, sich zu neigen,
wobei das Betätigungselement (1, 10) eine Betätigungsstange (1j, 10j) mit einer Säulenform und einen Basisbereich (1d, 10d) aufweist, der sich in einer Ebene erstreckt, durch die eine Achse der Betätigungsstange (1j, 10j) verläuft,
wobei sich der Basisbereich (1d, 10d) um die Neigungsstange (12e) dreht,
wobei der Basisbereich (1d, 10d) einen ersten Drückbereich (11p) und einen zweiten Drückbereich (21p) aufweist, die auf beiden Seiten der Betätigungsstange (1j, 10j) angeordnet sind, wobei die Neigungsstange (12e) dazwischen angeordnet ist,
wobei die Betätigungsvorrichtung (101, 102) ferner eine Mehrzahl von beweglichen Elementen (HK, H13, H23, H33, H44) aufweist, die die Mehrzahl von beweglichen Magnetkörpern (MM, M14, M24, M34, M44) halten und sich in Verbindung mit der Mehrzahl von beweglichen Magnetkörpern (MM, M14, M24, M34, M44) neigen,
wobei die Mehrzahl von beweglichen Elementen (HK, H13, H23, H33, H44) ein erstes bewegliches Element (H13), das dem ersten Drückbereich (11p) zugewandt angeordnet ist, und ein zweites bewegliches Element (H23) aufweisen, das dem zweiten Drückbereich (21p) zugewandt angeordnet ist,
wobei die Mehrzahl von beweglichen Magnetkörpern (MM, M14, M24, M34, M44) einen ersten beweglichen Magnetkörper (M14), einen zweiten beweglichen Magnetkörper (M24), einen dritten beweglichen Magnetkörper (M34) gepaart mit dem ersten beweglichen Magnetkörper (M14), sowie einen vierten beweglichen Magnetkörper (M44) gepaart mit dem zweiten beweglichen Magnetkörper (M24) aufweisen,
wobei das erste bewegliche Element (H13) den ersten beweglichen Magnetkörper (M14) hält und das zweite bewegliche Element (H23) den zweiten beweglichen Magnetkörper (M24) hält,
wobei die Mehrzahl von beweglichen Elementen (HK, H13, H23, H33, H44) ein drittes bewegliches Element (H33), das den dritten beweglichen Magnetkörper (M34) hält, und ein viertes bewegliches Element (H43) aufweist, das den vierten beweglichen Magnetkörper (M44) hält,
wobei dann, wenn das Betätigungselement (1, 10) in eine erste Richtung geneigt wird, der erste Drückbereich (11p), der sich in eine Richtung neigt, in die sich der Basisbereich (1d, 10d) neigt, das dem ersten Drückbereich (11p) gegenüberliegende erste bewegliche Element (H13) mit Druck beaufschlagt, der erste bewegliche Magnetkörper (M14), der von dem ersten beweglichen Element (H13) gehalten wird, geneigt wird, der entsprechende Anschlagbereich (6, 6a, 26, 26a) ein Neigen des dritten beweglichen Magnetkörpers (M34) verhindert, und der erste bewegliche Magnetkörper (M14) und der dritte bewegliche Magnetkörper (M34) voneinander getrennt werden, und
wobei dann, wenn das Betätigungselement (1, 10) weiter in die erste Richtung geneigt wird, der zweite Drückbereich (21p) das dem zweiten Drückbereich (21p) gegenüberliegende zweite bewegliche Element (H23) mit Druck beaufschlagt, der zweite bewegliche Magnetkörper (M24), der von dem zweiten beweglichen Element (H23) gehalten wird, geneigt wird, der entsprechende Anschlagbereich (6, 6b, 26, 26b) ein Neigen des vierten beweglichen Magnetkörpers (M44) verhindert, und der zweite bewegliche Magnetkörper (M24) und der vierte bewegliche Magnetkörper (M44) voneinander getrennt werden.

2. Betätigungsvorrichtung (101, 102) nach Anspruch 1,
wobei die Mehrzahl von beweglichen Elementen (HK, H13, H23, H33, H44) aus einem nichtmagnetischen Material bestehen.

3. Betätigungsvorrichtung (101, 102) nach Anspruch 2,
wobei der Basisbereich (1d, 10d) einen dritten Drückbereich (31p) gegenüber dem dritten beweglichen Element (H33) und einen vierten Drückbereich (41p) gegenüber dem vierten beweglichen Element (H43) aufweist, wobei der dritte Drückbereich (31p) und der vierte Drückbereich (41p) auf beiden Seiten der Betätigungsstange (1j, 10j) angeordnet sind, wobei die Neigungsstange (12e) dazwischen angeordnet ist,
wobei dann, wenn das Betätigungselement (1, 10) in eine zweite Richtung geneigt wird, der dritte Drückbereich (31p), der in die Richtung geneigt wird, in die sich der Basisbereich (1d, 10d) neigt, das dem dritten Drückbereich (31p) gegenüberliegende dritte bewegliche Element (H33) mit Druck beaufschlagt, der dritte bewegliche Magnetkörper (M34), der von dem dritten beweglichen Element (H33) gehalten wird, geneigt wird, der entsprechende Anschlagbereich (6, 6c, 26, 26d) ein Neigen des ersten beweglichen Magnetkörpers (M14) verhindert, und der erste bewegliche Magnetkörper (M14) und der dritte bewegliche Magnetkörper (M34) voneinander getrennt werden, und
wobei dann, wenn das Betätigungselement (1, 10) weiter in die zweite Richtung geneigt wird, der vierte Drückbereich (41p) das dem vierten Drückbereich (41p) gegenüberliegende vierte bewegliche Element (H43) mit Druck beaufschlagt, der vierte bewegliche Magnetkörper (M44), der von dem vierten beweglichen Element (H43) gehalten wird, geneigt wird, der entsprechende Anschlagbereich (6, 6d, 26, 26c) ein Neigen des zweiten beweglichen Magnetkörpers (M24) verhindert, und der zweite bewegliche Magnetkörper (M24) und der vierte bewegliche Magnetkörper (M44) voneinander getrennt werden.

4. Betätigungsvorrichtung (102) nach Anspruch 2,
wobei der Basisbereich (10d) einen fünften Drückbereich (51p) gegenüber dem dritten beweglichen Element (H33) und einen sechsten Drückbereich (61p) gegenüber dem vierten beweglichen Element (H43) aufweist, wobei der fünfte Drückbereich (51p) und der sechste Drückbereich (61p) auf beiden Seiten der Betätigungsstange (10j) angeordnet sind, wobei die Neigungsstange (12e) dazwischen angeordnet ist,
wobei dann, wenn das Betätigungselement (10) in eine zweite Richtung neigt wird, der sechste Drückbereich (61p), der sich in die Richtung neigt, in die sich der Basisbereich (10d) neigt, das dem sechsten Drückbereich (61p) gegenüberliegende vierte bewegliche Element (H43) mit Druck beaufschlagt, der vierte bewegliche Magnetkörper (M44), der von dem vierten beweglichen Element (H43) gehalten wird, geneigt wird, der entsprechende Anschlagbereich (26, 26c) ein Neigen des zweiten beweglichen Magnetkörpers (M24) verhindert, und der zweite bewegliche Magnetkörper (M24) und der vierte bewegliche Magnetkörper (M44) voneinander getrennt werden, und
wobei dann, wenn das Betätigungselement (1, 10) weiter in die zweite Richtung geneigt wird, der fünfte Drückbereich (51p) das dem fünften Drückbereich (51p) gegenüberliegende dritte bewegliche Element (H33) mit Druck beaufschlagt, der dritte bewegliche Magnetkörper (M34), der von dem dritten beweglichen Element (H33) gehalten wird, geneigt wird, der entsprechende Anschlagbereich (26, 26d) ein Neigen des ersten beweglichen Magnetkörpers (M14) verhindert, und der erste bewegliche Magnetkörper (M14) und der dritte bewegliche Magnetkörper (M34) voneinander getrennt werden.

5. Betätigungsvorrichtung (101, 102) nach einem der Ansprüche 2 bis 4,
wobei ein Drückelement (FB), das in der Lage ist, einen entsprechenden der beweglichen Magnetkörper (MM, M14, M24, M34, M44) in Richtung auf den gegenüberliegenden Magnetkörper (TM) zu drücken, an mindestens einem der beweglichen Elemente (HK, H13, H23, H33, H44) angeordnet ist.

6. Betätigungsvorrichtung (101, 102) nach Anspruch 5,
wobei das Drückelement (FB) mit mindestens einem der beweglichen Elemente (HK, H13, H23, H33, H44) einstückig ausgebildet ist, an dem das Drückelement (FB) angeordnet ist.

7. Betätigungsvorrichtung (101, 102) nach einem der Ansprüche 1 bis 6,
das ferner ein Halteelement (32A) aufweist, das sich nicht in Verbindung mit einem Neigungsvorgang des Betätigungselements (1, 10) bewegt,
wobei das Halteelement (32A) den gegenüberliegenden Magnetkörper (TM) hält.

8. Betätigungsvorrichtung (101, 102) nach einem der Ansprüche 1 bis 7,
wobei das Paar der beweglichen Magnetkörper (MM, M14, M24, M34, M44) derart gekrümmt ist, dass Endflächen von einem der beweglichen Magnetkörper (MM, M14, M24, M34, M44) Endflächen von dem anderen der beweglichen Magnetkörper (MM, M14, M24, M34, M44) zugewandt sind.

9. Betätigungsvorrichtung (101, 102) nach einem der Ansprüche 1 bis 8,
wobei das Paar der beweglichen Magnetkörper (MM, M14, M24, M34, M44) an solchen Positionen angeordnet ist, an denen eine Anziehungskraft zwischen dem Paar der beweglichen Magnetkörper (MM, M14, M24, M34, M44) ausgeübt bleibt, wenn das Paar der beweglichen Magnetkörper (MM, M14, M24, M34, M44) infolge einer Neigung des Betätigungselements (1, 10) voneinander getrennt wird.

10. Fahrzeugschaltvorrichtung, aufweisend:
die Betätigungsvorrichtung (101, 102) gemäß einem der Ansprüche 1 bis 9, eine Steuereinheit (50C), die bei Empfang von Signalen von der Betätigungsvorrichtung (101, 102) Signale an Bordgeräte sendet;
einen Schaltknauf (50N), der mit dem Betätigungselement (1, 10) der Betätigungsvorrichtung (101, 102) zusammenwirkt und von der Bedienungsperson gegriffen wird; und
eine Positionserfassungseinrichtung zum Erfassen, in welcher der mehreren Stellungen das Betätigungselement (1, 10) angeordnet ist.

## Revendications

1. Dispositif de commande (101, 102) présentant une pluralité de positions, comprenant :
un élément de commande (1, 10) inclinable en étant commandé par un opérateur, l'élément de commande (1, 10) étant disposé dans la pluralité de positions suite à son inclinaison par l'opérateur à partir d'une position de référence ;
un corps de support (2) qui supporte l'élément de commande (1, 10) de manière à permettre à l'élément de commande (1, 10) de s'incliner ;
une pluralité de parties de butée (6, 6a, 6b, 6c, 6d, 26, 26a, 26b, 26c, 26d) correspondant à la pluralité de positions ;
une pluralité de corps magnétiques mobiles (MM, M14, M24, M34, M44) qui s'inclinent en association avec l'élément de commande (1,10) ; et
un corps magnétique opposé (TM) disposé entre chaque paire opposée de la pluralité de corps magnétiques mobiles (MM, M14, M24, M34, M44),
dans lequel la pluralité de corps magnétiques mobiles (MM, M14, M24, M34, M44) sont composés d'un matériau magnétique doux et le corps magnétique opposé (TM) est composé d'un aimant permanent,
dans lequel les corps magnétiques mobiles formant paire (MM, M14, M24, M34, M44) sont situés à proximité et s'attirent mutuellement lorsque l'élément de commande (1, 10) est disposé dans la position de référence, et
dans lequel l'un des corps magnétiques mobiles (MM, M14, M24) de la paire est incliné et l'autre corps magnétique mobile (MM, M34, M44) de la paire est empêché de s'incliner par la partie de butée correspondante (6, 6a, 6b, 6c, 6d, 26, 26a, 26b, 26c, 26d) lorsque l'élément de commande (1, 10) est disposé dans l'une de la pluralité de positions après avoir été incliné depuis la position de référence ;
dans lequel le corps de support (2) inclut une tige d'inclinaison (12e) qui permet à l'élément de commande (1, 10) de s'incliner,
dans lequel l'élément de commande (1, 10) inclut une tige de commande (1j, 10j) ayant une forme de pilier, et une partie de base (1d, 10d), s'étendant dans un plan par lequel passe un axe de la tige de commande (1j, 10j),
dans lequel la partie de base (1d, 10d) tourne autour de la tige d'inclinaison (12e),
dans lequel la partie de base (1d, 10d) inclut une première partie de poussée (11p) et une deuxième partie de poussée (21p), disposées des deux côtés de la tige de commande (1j, 10j), la tige d'inclinaison (12e) étant interposée entre les deux,
le dispositif de commande (101, 102) comprenant en outre une pluralité d'éléments mobiles (HK, H13, H23, H33, H44) qui maintiennent la pluralité de corps magnétiques mobiles (MM, M14, M24, M34, M44) et s'inclinent en association avec la pluralité de corps magnétiques mobiles (MM, M14, M24, M34, M44),
dans lequel la pluralité d'éléments mobiles (HK, H13, H23, H33, H44) incluent un premier élément mobile (H13), disposé de manière à faire face à la première partie de poussée (11p), et un deuxième élément mobile (H23), disposé de manière à faire face à la deuxième partie de poussée (21p),
dans lequel la pluralité de corps magnétiques mobiles (MM, M14, M24, M34, M44) incluent un premier corps magnétique mobile (M14), un deuxième corps magnétique mobile (M24), un troisième corps magnétique mobile (M34), formant paire avec le premier corps magnétique mobile (M14), et un quatrième corps magnétique mobile (M44), formant paire avec le deuxième corps magnétique mobile (M24),
dans lequel le premier élément mobile (H13) maintient le premier corps magnétique mobile (M14) et le deuxième élément mobile (H23) maintient le deuxième corps magnétique mobile (M24),
dans lequel la pluralité d'éléments mobiles (HK, H13, H23, H33, H44) incluent un troisième élément mobile (H33), qui maintient le troisième corps magnétique mobile (M34), et un quatrième élément mobile (H43), qui maintient le quatrième corps magnétique mobile (M44),
dans lequel, lorsque l'élément de commande (1, 10) est incliné dans une première direction, la première partie de poussée (11p) s'inclinant dans une direction dans laquelle la partie de base (1d, 10d) s'incline pousse le premier élément mobile (H13) étant opposé à la première partie de poussée (11p), le premier corps magnétique mobile (M14) maintenu par le premier élément mobile (H13) est incliné, la partie de butée correspondante (6, 6a, 26, 26a) empêche le troisième corps magnétique mobile (M34) de s'incliner, et le premier corps magnétique mobile (M14) et le troisième corps magnétique mobile (M34) sont séparés l'un de l'autre, et
dans lequel, lorsque l'élément de commande (1, 10) continue d'être incliné davantage dans la première direction, la deuxième partie de poussée (21p) pousse le deuxième élément mobile (H23) étant opposé à la deuxième partie de poussée (21p), le deuxième corps magnétique mobile (M24) maintenu par le deuxième élément mobile (H23) est incliné, la partie de butée correspondante (6, 6b, 26, 26b) empêche le quatrième corps magnétique mobile (M44) de s'incliner, et le deuxième corps magnétique mobile (M24) et le quatrième corps magnétique mobile (M44) sont séparés l'un de l'autre.

2. Le dispositif de commande (101, 102) selon la revendication 1,
dans lequel la pluralité d'éléments mobiles (HK, H13, H23, H33, H44) sont composés d'un matériau non magnétique.

3. Le dispositif de commande (101, 102) selon la revendication 2,
dans lequel la partie de base (1d, 10d) inclut une troisième partie de poussée (31p), étant opposée au troisième élément mobile (H33), et une quatrième partie de poussée (41p), étant opposée au quatrième élément mobile (H43),
dans lequel la troisième partie de poussée (31p) et la quatrième partie de poussée (41p) sont disposées des deux côtés de la tige de commande (1j, 10j), la tige d'inclinaison (12e) étant interposée entre les deux,
dans lequel, lorsque l'élément de commande (1, 10) est incliné dans une deuxième direction, la troisième partie de poussée (31p) s'inclinant dans la direction dans laquelle la partie de base (1d, 10d) s'incline pousse le troisième élément mobile (H33) étant opposé à la troisième partie de poussée (31p), le troisième corps magnétique mobile (M34) maintenu par le troisième élément mobile (H33) est incliné, la partie de butée correspondante (6, 6c, 26, 26d) empêche le premier corps magnétique mobile (M14) de s'incliner, et le premier corps magnétique mobile (M14) et le troisième corps magnétique mobile (M34) sont séparés l'un de l'autre, et
dans lequel, lorsque l'élément de commande (1, 10) continue d'être incliné davantage dans la deuxième direction, la quatrième partie de poussée (41p) pousse le quatrième élément mobile (H43) étant opposé à la quatrième partie de poussée (41p), le quatrième corps magnétique mobile (M44) maintenu par le quatrième élément mobile (H43) est incliné, la partie de butée correspondante (6, 6d, 26, 26c) empêche le deuxième corps magnétique mobile (M24) de s'incliner, et le deuxième corps magnétique mobile (M24) et le quatrième corps magnétique mobile (M44) sont séparés l'un de l'autre.

4. Le dispositif de commande (102) selon la revendication 2,
dans lequel la partie de base (10d) inclut une cinquième partie de poussée (51p), étant opposée au troisième élément mobile (H33), et une sixième partie de poussée (61p), étant opposée au quatrième élément mobile (H43),
dans lequel la cinquième partie de poussée (51p) et la sixième partie de poussée (61p) sont disposées des deux côtés de la tige de commande (10j), la tige d'inclinaison (12e) étant interposée entre les deux,
dans lequel, lorsque l'élément de commande (10) est incliné dans une deuxième direction, la sixième partie de poussée (61p) s'inclinant dans la direction dans laquelle la partie de base (10d) s'incline pousse le quatrième élément mobile (H43) étant opposé à la sixième partie de poussée (61p), le quatrième corps magnétique mobile (M44) maintenu par le quatrième élément mobile (H43) est incliné, la partie de butée correspondante (26, 26c) empêche le deuxième corps magnétique mobile (M24) de s'incliner, et le deuxième corps magnétique mobile (M24) et le quatrième corps magnétique mobile (M44) sont séparés l'un de l'autre, et
dans lequel, lorsque l'élément de commande (1, 10) continue d'être incliné davantage dans la deuxième direction, la cinquième partie de poussée (51p) pousse le troisième élément mobile (H33) étant opposé à la cinquième partie de poussée (51p), le troisième corps magnétique mobile (M34) maintenu par le troisième élément mobile (H33) est incliné, la partie de butée correspondante (26, 26d) empêche le premier corps magnétique mobile (M14) de s'incliner, et le premier corps magnétique mobile (M14) et le troisième corps magnétique mobile (M34) sont séparés l'un de l'autre.

5. Le dispositif de commande (101, 102) selon l'une quelconque des revendications 2 à 4,
dans lequel un élément de sollicitation (FB) capable de solliciter l'un des corps magnétiques mobiles correspondants (MM, M14, M24, M34, M44) à travers le corps magnétique opposé (TM) est disposé sur au moins un des éléments mobiles (HK, H13, H23, H33, H44).

6. Le dispositif de commande (101, 102) selon la revendication 5,
dans lequel l'élément de sollicitation (FB) est intégré à l'un au moins des éléments mobiles (HK, H13, H23, H33, H44) sur lequel l'élément de sollicitation (FB) est disposé.

7. Le dispositif de commande (101, 102) selon l'une quelconque des revendications 1 à 6, comprenant en outre un élément de maintien (32A) qui ne bouge pas en association avec une commande d'inclinaison de l'élément de commande (1, 10),
dans lequel l'élément de maintien (32A) maintient le corps magnétique opposé (TM).

8. Le dispositif de commande (101, 102) selon l'une quelconque des revendications 1 à 7,
dans lequel les corps magnétiques mobiles formant paire (MM, M14, M24, M34, M44) sont incurvés de telle sorte que les surfaces d'extrémité des uns des corps magnétiques mobiles (MM, M14, M24, M34, M44) font face aux surfaces d'extrémité des autres corps magnétiques mobiles (MM, M14, M24, M34, M44).

9. Le dispositif de commande (101, 102) selon l'une quelconque des revendications 1 à 8,
dans lequel les corps magnétiques mobiles formant paire (MM, M14, M24, M34, M44) sont disposés dans des positions où une force d'attraction continue de s'exercer entre les corps magnétiques mobiles formant paire (MM, M14, M24, M34, M44) lorsque les corps magnétiques mobiles formant paire (MM, M14, M24, M34, M44) sont séparés l'un de l'autre suite à l'inclinaison de l'élément de commande (1, 10).

10. Dispositif de changement de vitesses de véhicule, comprenant :
le dispositif de commande (101, 102) selon l'une quelconque des revendications 1 à 9,
une unité de contrôle (50C) qui transmet des signaux à des dispositifs de bord à la réception de signaux provenant du dispositif de commande (101, 102) ;
un pommeau de levier de vitesses (50N) engagé avec l'élément de commande (1, 10) du dispositif de commande (101, 102) et tenu par l'opérateur ; et
des moyens de détection de position permettant de détecter, parmi la pluralité de positions, dans laquelle l'élément de commande (1, 10) est disposé.
